# EUROPEAN PATENT SPECIFICATION

(11) **EP 4 516 689 B1**
(45) Date of publication and mention of the grant of the patent: **25.11.2026**
(21) Application number: 22944189.4
(22) Date of filing: 31.05.2022
(51) Int. Cl.: B65D 21/032, B65D 25/20, B65D 55/14, B25H 3/02, F16B 21/02, F16B 21/18

(54) **LOCKING CONNECTING DEVICE AND COMBINED CONTAINER**
VERRIEGELUNGSVORRICHTUNG UND KOMBINIERTER BEHÄLTER
DISPOSITIF DE LIAISON PAR VERROUILLAGE ET RÉCIPIENT COMBINÉ

(43) Date of publication of application: 05.03.2025
(73) Proprietor: Hangzhou Great Star Industrial Co., Ltd., Zhejiang 310019 (CN)
(72) Inventor: LI, Yueming, Hangzhou, Zhejiang 310019 (CN)
(74) Representative: Meyer-Dulheuer MD Legal Patentanwälte PartG mbB
(86) International application number: PCT/CN2022/096278
(87) International publication number: WO 2023/230852

(56) References cited:
- WO-A1-2021/000525
- CN-A- 103 603 858
- CN-A- 111 924 270
- CN-A- 114 335 869
- CN-A- 114 335 869
- CN-B- 103 603 858
- CN-U- 215 362 410
- CN-U- 215 362 410
- DE-A1- 102015 013 053
- DE-A1- 102019 111 950
- DE-B4- 102019 111 950

## Description

### TECHNICAL FIELD

The present disclosure relates to the field of container stacking technology, and in particular, to a locking connection device and a combined container.

### BACKGROUND

In related technology, tool boxes and the tool cases are often of various sizes and numerous in quantity. When the tool boxes and the tool cases are used for storage, they are usually stacked layer by layer to reduce a storage space. However, the tool boxes and the tool cases are usually made of plastic material and have a relatively smooth surface. Therefore, when the tool boxes and the tool cases are stacked on a top of each other, a bearing surface of a lower tool box/case is prone to slide relative to a bottom surface of an upper tool box and the tool case and resulting in tipping over. Thus the tool boxes/cases are unable to be stacked at a relatively high height and requiring a relatively larger storage space. In addition, during transportation, a plurality of tool boxes and a plurality of tool cases are required be stacked for the transportation. If it is only simple stacking, it will be unstable, not only difficult to transport, but also exist a potential risk.

Document DE 10 2019 111950 B4 discloses a combined container according to the preamble of claim 1.

### SUMMARY

According to various embodiments of the present disclosure, a locking connecting device and a combined container are provided.

The present disclosure provides a locking connecting device configured to combine a first container and a second container. The locking connecting device includes a fitting member disposed on the second container and a locking mechanism. The locking mechanism is capable of being operatably disposed on the first container and configured to be releasably snap-fitted to the fitting member, enabling the locking connecting device to switch between a locked state and an unlocked state. When the locking mechanism is operated to enable the locking connecting device to be in the locked state, the locking mechanism and the fitting member are snap-fitted to each other to prevent the first container and the second container combined with each other from being separated from each other. And when the locking mechanism is operated to enable the locking connecting device to be in the unlocked state, the locking mechanism and the fitting member are released from each other to enable the first container and the second container combined with each other to be separated from each other.

The present invention provides a combined container according to claim 1. The combined container includes a first container, a second container and the above locking connecting device. The locking connecting device is correspondingly disposed between the first container and the second container and configured to be releasably locked on the first container.

Details of one or more embodiments of this disclosure are presented in the attached drawings and descriptions below. And other features, purposes and advantages of this disclosure will become apparent from the description, drawings and claims.

### BRIEF DESCRIPTION OF THE DRAWINGS

For a better description and illustration of embodiments and/or examples of those disclosures disclosed herein, reference may be made to one or more attached drawings. Additional details or examples used to describe the drawings should not be considered as limiting the scope of any of the disclosed disclosures, currently described embodiments and/or examples, and currently understood best modes of these disclosures.
FIG. 1 is a schematic diagram of a combined container in a first embodiment of the present disclosure.
FIG. 2 is an exploded schematic diagram of the combined container in the above first embodiment of the present disclosure.
FIG. 3 is a cross-section schematic diagram of the combined container along a longitudinal direction in the above first embodiment of the present disclosure, and wherein an enlarged portion of a locking connecting device of the combined container is in a locked state.
FIG. 4 is a cross-section schematic diagram of the combined container along a lateral direction in the above first embodiment of the present disclosure, and wherein an enlarged portion of a locking connecting device of the combined container is in an unlocked state.
FIG. 5 is an embodiment of a locking mechanism of the locking connecting device of the combined container in the above first embodiment of the present disclosure.
FIG. 6 is an exploded schematic diagram of the locking mechanism in the above embodiment of the present disclosure.
FIG. 7 is an exploded schematic diagram of the locking mechanism in another view in the above embodiment of the present disclosure.
FIG. 8 is a cross-section schematic diagram of the locking mechanism along a lateral direction in the above embodiment of the present disclosure.
FIG. 9 is a top view of the locking mechanism in the above embodiment of the present disclosure.
FIG. 10 is a cross-sectional schematic view of the locking mechanism along A-A line in FIG. 9.
FIG. 11 is a cross-sectional schematic view of the locking mechanism along B-B line in FIG. 9.
FIG. 12 is a cross-sectional schematic view of the locking mechanism along C-C line in FIG. 9.
FIG. 13 is a schematic diagram of a pressing process of the locking mechanism in the above embodiment of the present disclosure.
FIG. 14 is an alternative embodiment of a locking connecting device of a combined container in the first embodiment of the present disclosure.
FIG. 15 is an exploded schematic diagram of the locking mechanism in the above alternative embodiment of the present disclosure.
FIG. 16 is a schematic diagram of a rotating process of the locking mechanism in the above alternative embodiment of the present disclosure.
FIG. 17 is a schematic diagram of a combined container in a second embodiment of the present disclosure.
FIG. 18 is an exploded schematic diagram of the combined container in the above second embodiment of the present disclosure.
FIG. 19 is an exploded schematic diagram of the combined container in another view in the above second embodiment of the present disclosure.
FIG. 20 is an alternative embodiment of a combined container in the second embodiment of the present disclosure.
FIG. 21 is an exploded schematic diagram of the combined container in the above alternative embodiment of the present disclosure.
FIG. 22 is an exploded schematic diagram of the combined container in another view in the above alternative embodiment of the present disclosure.
FIG. 23 is a schematic diagram of a combined container in a third embodiment of the present disclosure.
FIG. 24 is an exploded schematic diagram of the combined container in the above third embodiment of the present disclosure.

### DETAILED DESCRIPTION

In related technology, when containers, such as boxes/cases and so on, is used for storage, they are unable to be stacked at a relatively high height due to instability during simple stacking, and requiring a relatively larger storage space. During transportation, they are difficult to transport and it exists potential risk due to no reliable connecting structure between the containers. In order to solve above problems, the present disclosure provides a locking connecting device and a combined container, which are capable of releasably locking multiple stacked containers, thereby realizing safe stacking and minimizing the potential risk.

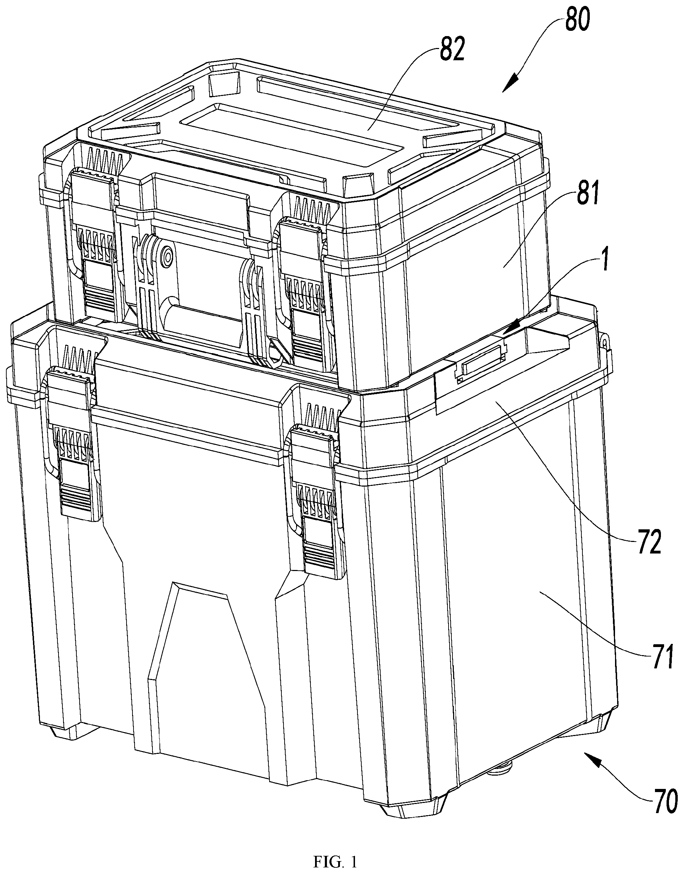

In the present disclosure, referring to FIGs. 1 to 13, a first embodiment of the present disclosure provides a combined container. The combined container includes a locking connecting device 1 and a first container 70 and a second container 80, which are combined together. The locking connecting device 1 is configured to be correspondingly disposed between the first container 70 and the second container 80, such that the second container 80 can be releasably locked on and connected to the first container 70 in a releasable manner, facilitating minimize a potential risk of container stacking, storing and transporting.

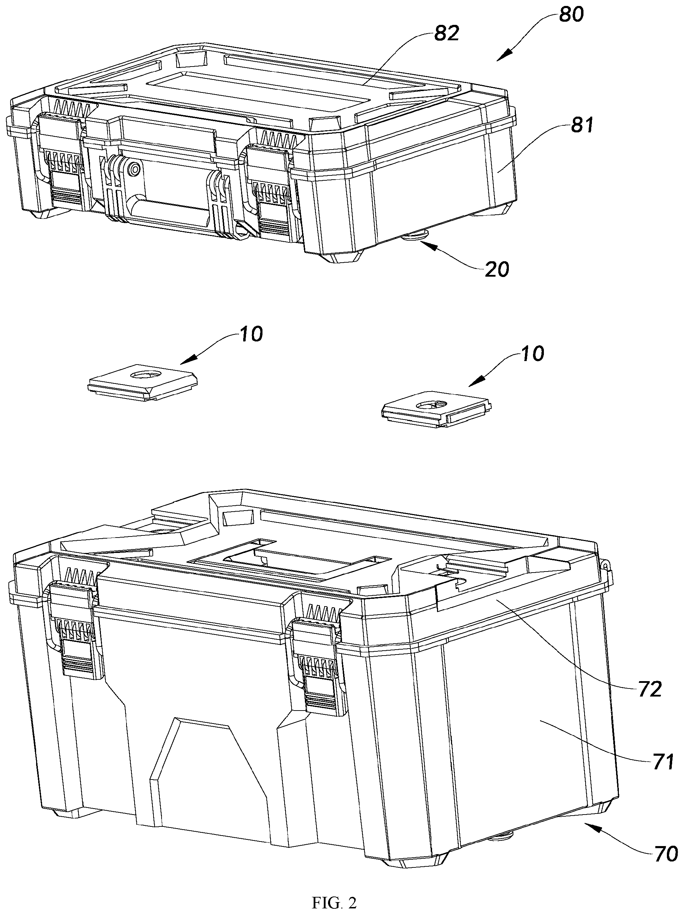

Referring to FIGs. 2, 3 and 4, the locking connecting device 1 includes a locking mechanism 10 and a fitting member 20 disposed on the second container 80. The locking mechanism 10 is capable of being operatably disposed on the first container 70, and configured to be releasably snap-fitted to the fitting member 20, such that the locking mechanism 1 is switched between a locked state and an unlocked state. When the locking mechanism 10 is operated to enable the locking connecting device 1 to be in the locked state, the locking mechanism 10 and the fitting member 20 are snap-fitted to each other to prevent the first container 70 and the second container 80 stacked together from being separated from each other, such that the first container 70 and the second container 80 can be safety stacked, facilitating storing and transporting. When the locking mechanism 10 is operated to enable the locking connecting device 1 to be in the unlocked state, the locking mechanism 10 and the fitting member 20 are released from each other to enable the first container 70 and the second container 80 stacked with each other to be separated from each other, such that the first container 70 and the second container 80 can be un-stacked, facilitating using the first container 70 or the second container 80 separately.

The first container 70 and the second container 80 can be implemented, but are not limited to, as a tool box or a tool case used for holding tools or work materials. Alternatively, in other embodiments of the present disclosure, the first container 70 and the second container 80 can be implemented as other types of boxes or cases. Alternatively, the first container 70 and the second container 80 can be implemented as other types of containers such as buckets, cabinets and so on, which are not limited herein.

Alternatively, referring to FIG. 2, in the present disclosure, the locking mechanism 10 of the locking connecting device 1 is detachably mounted on the first container 70, facilitating repairing and replacing the locking mechanism 10 as required, and producing and selling the locking mechanism 10 separately.

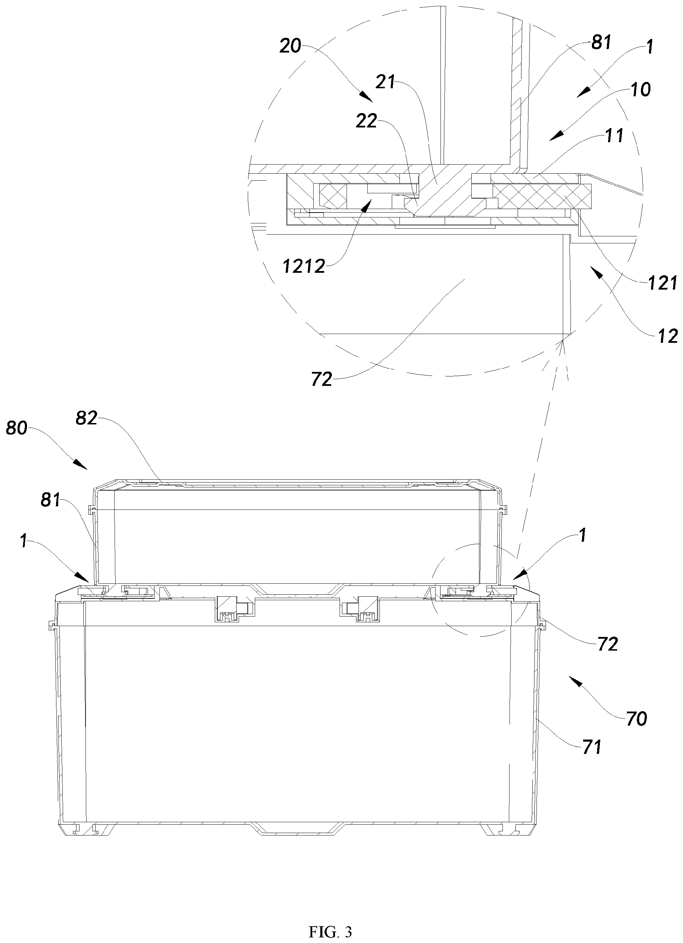

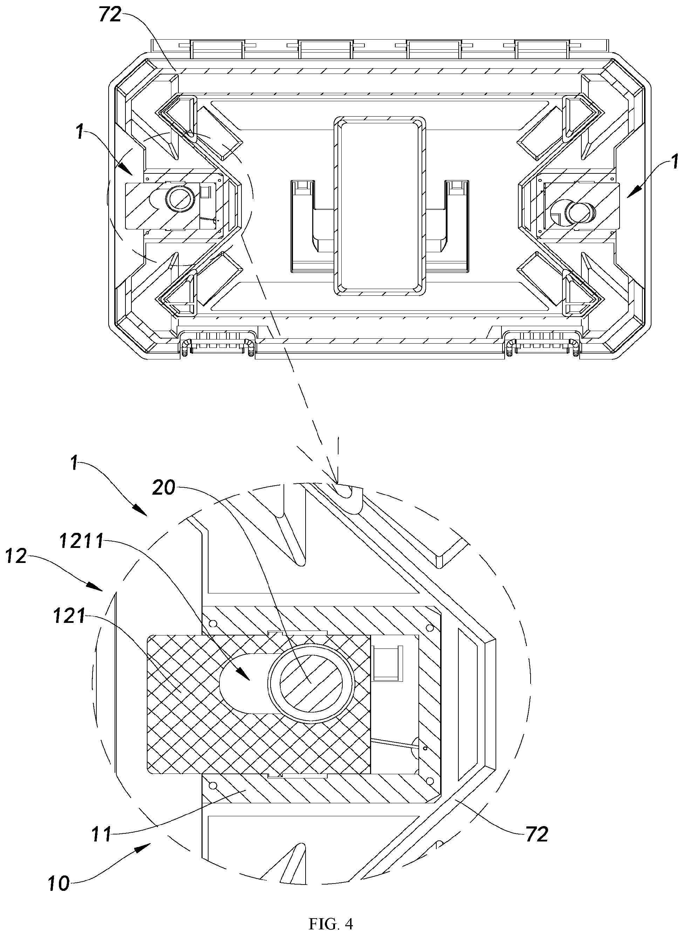

Referring to FIGs. 3 and 4, in the present disclosure, the locking mechanism 10 includes a locking housing 11 detachably disposed on the first container 70 and a lock cylinder 12 movably disposed on the locking housing 11. The locking cylinder 12 is configured to move between a locked position and an unlocked position. When the lock cylinder 12 is driven to move to the locked position relative to the locking housing 11, the lock cylinder 12 is configured to be snap-fitted to the fitting member 20 to enable the locking connecting device 1 to be in the locked state. When the lock cylinder 12 is driven to move to the unlocked position relative to the locking housing 11, the lock cylinder 12 is configured to be released from the fitting member 20 to enable the locking connecting device 1 to be in the unlocked state.

In particular, referring to FIGs. 2 and 4, the locking housing 11 of the locking mechanism 10 can be, but is not limited to, snap-fitted to the first container 70, which is conducive to ensuring the locking mechanism 10 to be stably mounted on the first container 70 and detaching the locking mechanism 10 from the first container 70, and facilitating repairing or replacing the locking mechanism 10. The locking housing 11 of the locking mechanism 10 in the present disclosure can be detachably mounted on the first container 70 by screwing or other methods. Alternatively, in other embodiments not according to the invention, the locking mechanism 10 can be fixedly disposed on the first container 70, which means that the locking housing 11 of the locking mechanism 10 can be fixedly connected to the first container 70 by riveting, welding, integral molding and other methods.

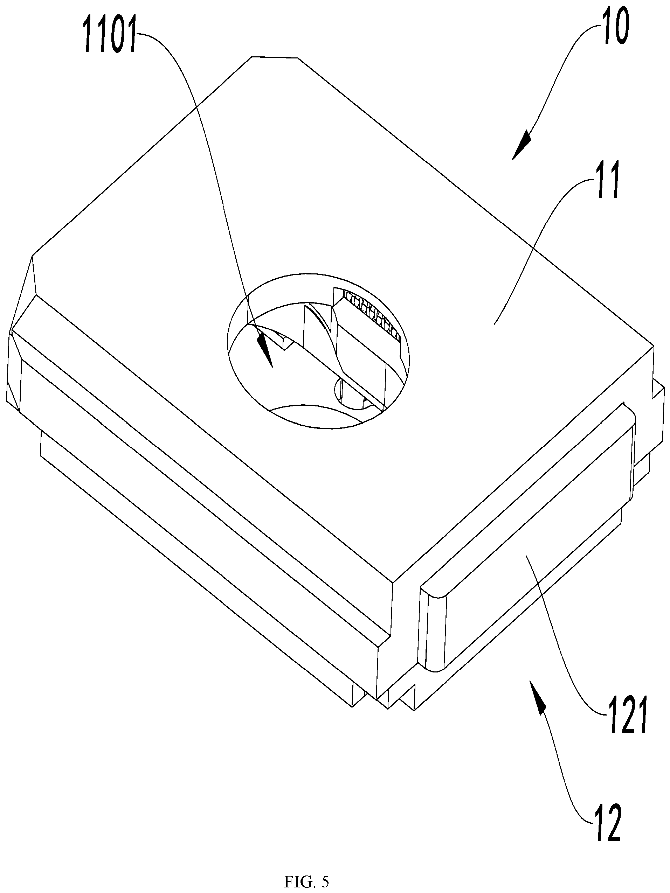

Referring to FIGs. 5, 6, and 7, the lock cylinder 12 of the locking mechanism 10 is implemented as a sliding lock 121. The sliding lock 121 is slidably disposed on the locking housing 11. The sliding lock 121 is provided with a locking hole 1211 configured to be snap-fitted to the fitting member 20 and an unlocking hole 1212 configured to be released from the fitting member 20. The locking hole 1211 is in communication with the unlocking hole 1212 along a sliding direction of the sliding lock 121. When the sliding lock 121 is driven to slide to the locked position, the locking hole 1211 of the sliding lock 121 corresponds to the fitting member 20, such that the fitting member 20 can be snap-fitted to the locking hole 1211 of the sliding lock 121, the fitting member 20 and the locking mechanism 10 are snap-fitted to each other to enable the locking connecting device 1 to be in the locked state. When the sliding lock 121 is driven to slide to the unlocked position, the unlocking hole 1212 of the sliding lock 121 corresponds to the fitting member 20, such that the fitting member 20 can slide from the locking hole 1211 to the unlocking hole 1212, the locking mechanism 10 and the fitting member 20 are released from each other to enable the locking connecting device 1 to be in the unlocked state.

In other words, in the present disclosure, a sliding passage is defined by the locking hole 1211 of the sliding lock 121 and the unlocking hole 1212 of the sliding lock 121 and configured for allowing the fitting member 20 to slide. When the sliding lock 121 slides relative to the locking housing 11, the fitting member 20 is capable of sliding between the locking hole 1211 and the unlocking hole 1212. When the fitting member 20 slides from the unlocking hole 1212 into the locking hole 1211, the fitting member 20 is snap-fitted to the locking hole 1211 of the sliding lock 121. When the fitting member 20 slides from the locking hole 1211 into the unlocking hole 1212, the fitting member 20 can be detached from the unlocking hole 1212, thereby the fitting member 20 and the locking mechanism 10 are released from each other.

Alternatively, referring to FIGs. 3 and 4, a size of a head part 22 of the fitting member 20 is greater than that of the locking hole 1211 of the sliding lock 121, and less than that of the unlocking hole 1212 of the sliding lock 121, such that the head part 22 of the fitting member 20 can freely enter the unlocking hole 1212, and the head part of the fitting member 20 and the locking hole 1211 can be snap-fitted together.

For example, the fitting member 20 has a tail part 21 disposed on the second container 80, and the size of the head part 22 of the fitting member 20 is greater than that of the tail part 21 of the fitting member 20. The size of the locking hole 1211 of the sliding lock 121 is less than that of the head part 22 of the fitting member 20, and greater than that of the tail part 21 of the fitting member 20. The size of the unlocking hole 1212 is greater than that of the head part 22 of the fitting member 20, facilitating ensuring the head part 22 of the fitting member 20 to be capable of freely entering and exiting the unlocked hole 1212, and the head part 22 of the fitting member 20 and the locking hole 1211 to be fit-snapped to each other.

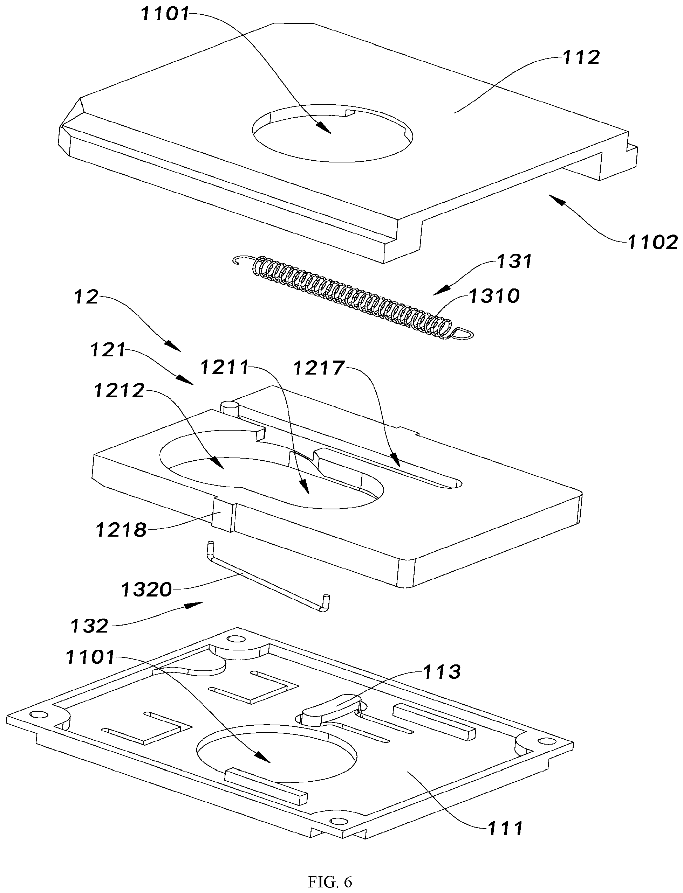

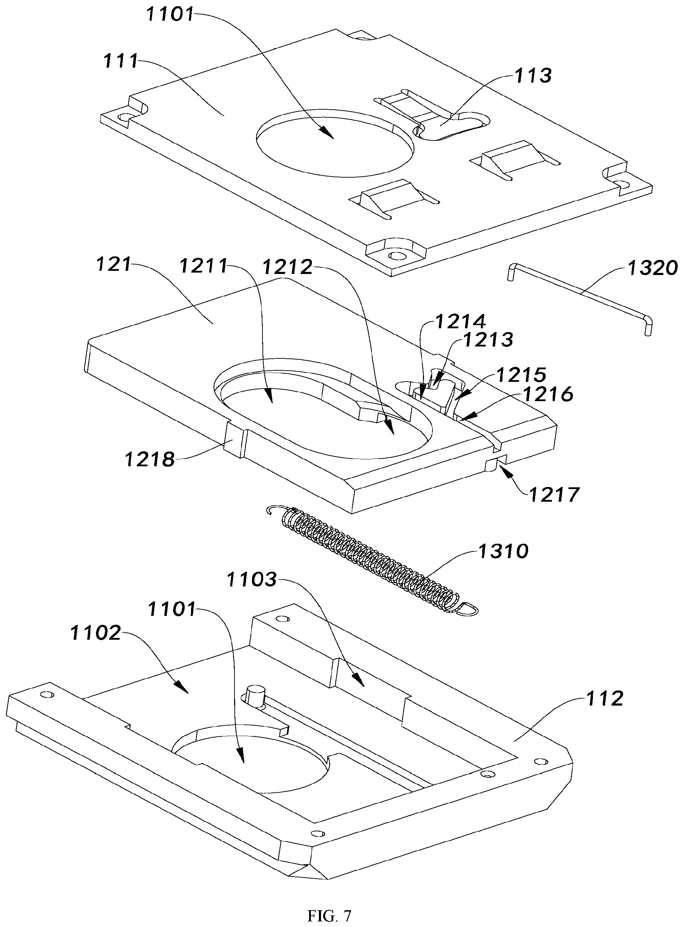

Alternatively, referring to FIGs. 6 and 7, the locking housing 11 of the locking mechanism 10 includes an inserting cavity 1101 and a sliding cavity 1102 in communication with each other. The sliding lock 121 of the lock cylinder 12 is capable of slidably inserting into the sliding cavity 1102 of the locking housing 11. The fitting member 20 is capable of inserting into the inserting cavity 1101 of the locking housing 11 to be releasably snap-fitted to the sliding lock 121. In other words, when the sliding lock 121 slides forward to align the unlocking hole 1212 with the inserting cavity 1101 of the locking housing 11, the fitting member 20 is released by the unlocking hole 1212 of the sliding lock 121 to freely enter the inserting cavity 1101 of the locking housing 11, enabling the locking connecting device 1 to be in the unlocked state. When the sliding lock 121 slides in reverse to align the locking hole 1211 with the inserting cavity 1101 of the locking housing 11, the fitting member 20 is snap-fitted by the locking hole 1211 of the sliding lock 121 to be remained in the inserting cavity 1101 of the locking housing 11, enabling the locking connecting device 1 to be in the locked state.

In the present disclosure, sliding forwards and sliding in reverse merely indicate that the sliding lock 121 slides along two opposite directions. For example, when the normal sliding corresponds to sliding leftwards, and the reverse sliding corresponds to sliding rightwards, which is not limited herein. In addition, because the sliding lock 121 of the locking mechanism 10 is required to be driven to slide along the two opposite directions during processed of unlocking and locking, it is required to push and pull the sliding lock 121 by users.

In order to simple an operation of the user, referring to FIGs. 6 to 8, the locking mechanism 10 of the present disclosure further includes a switch 13. The switch 13 is correspondingly disposed between the locking housing 11 and the sliding lock 121 and configured to enable the sliding lock 121 to slide and switch between the locked position and the unlocked position after the sliding lock is pressed. In other words, when the sliding lock 121 is pressed in the locked position, the switch 13 is configured to switch the sliding lock 121 from the unlocked position to the locked position to enable the locking connecting device 1 to be remained at the unlocked state. When the sliding lock 121 is pressed in the locked position, the switch 13 is configured to switch the sliding lock 121 from the locked position to the unlocked position to enable the locking connecting device 1 to be remained in the unlocked state. This is, it is required to continuously press the sliding lock 121, such that the sliding lock 121 is capable of sliding bidirectionally to switch between the locked position and the unlocked position. It merely needs a simple pressing operation, such that the locking connecting device 1 is capable of being switched between the locked state and the unlocked state. It is not required to push or pull the sliding lock 121 to switch the locked state or the unlocked state of the sliding lock 1.

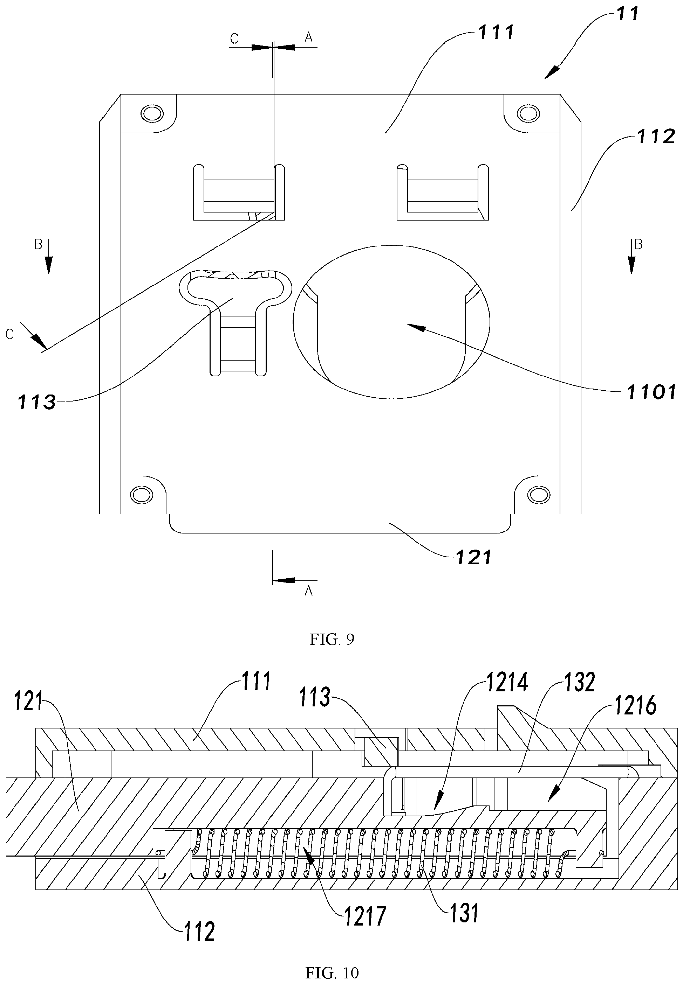

In particular, referring to FIGs. 9 to 12, the switch 13 of the locking mechanism 10 includes a resetting member 131 and a limiting member 132. The resetting member 131 is disposed between the locking housing 11 and the sliding lock 121 and configured to apply a force opposite to a pressing direction on the sliding lock 121, such that the sliding lock 121 has a tendency to slide outside the sliding cavity 1102 of the locking housing 11. The limiting member 132 is disposed between the locking housing 11 and the sliding lock 121, configured to releasably restrict the sliding lock 121. When the sliding lock 121 is restricted by the limiting member 132, the sliding lock 121 can be remained at the locked position by the resetting member 131 and the limiting member 132, such that the locking connecting device 1 can be stably remained at the locked state. When the sliding lock 121 and the limiting member 132 are released from each other, the sliding lock 121 can automatically slide into the unlocked position to enable the locking connecting device 1 to be stably remained at the locked state by the resetting member 131.

One end of the limiting member 132 can be releasbly hooked the sliding lock 121, and the other end of the limiting member 132 can be hooked on the locking housing 11. This is, when the sliding lock 121 is at the unlocked position, a part of the sliding lock 121 extends outside the sliding cavity 1102 of the locking housing 11, facilitating pressing the sliding lock 121. When the sliding lock 121 is pressed to enable the sliding lock 121 to be at the locked position, a part of the sliding lock 121 is retracted to the sliding cavity 1102, and the sliding lock 121 is hooked by the limiting member 132. When the sliding lock 121 is pressed again, the limiting member 132 and the sliding lock 121 are released from each other, such that the sliding lock 121 can slide from the locked position into the unlocked position. Repeatedly pressing like this, it can realize to enable the sliding lock 121 to switch from the locked position and the unlocked position. The sliding lock 121 can be stably remained at the locked position or the unlocked position after being switched until it is pressed again. In other embodiments of the present disclosure, the other end of the limiting member 132 can be connected to the locking housing 11 through a hinge, a pivot connection and so on, as long as an end of the limiting member 132 can be ensured to be hooked to the sliding lock 121 in a releasable manner, which is not limited herein.

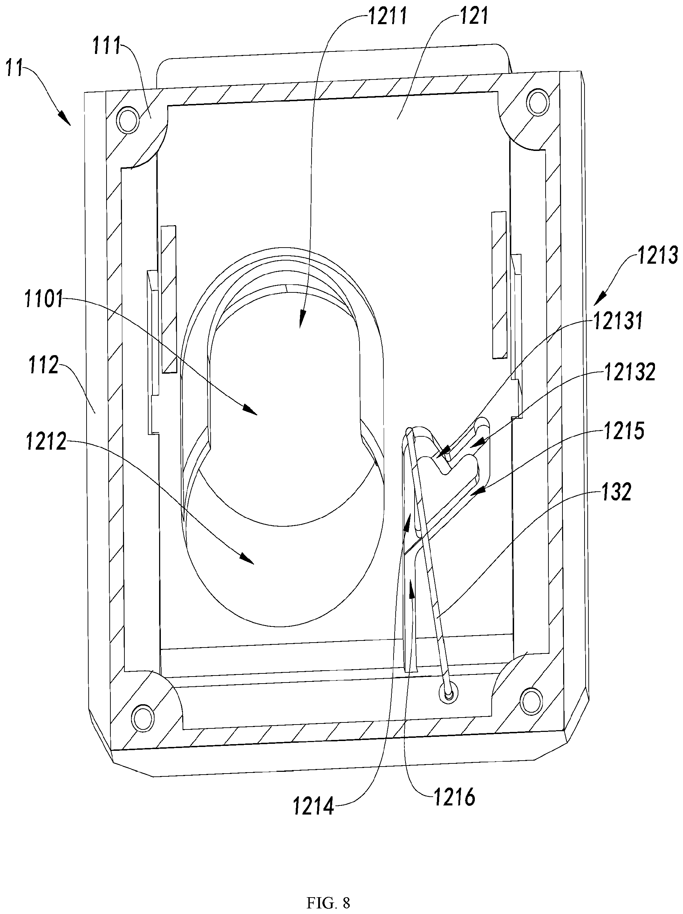

Referring to FIGs. 7 and 8, the sliding lock 121 of the locking mechanism 10 can be further provided with a locking groove 1213, an unlocking guiding groove 1214 in communication with a sliding-out end 12131 of the locking groove 1213, a locking guiding groove 1215 in communication with a sliding-in end 12132 of the locking groove 1213, and an unlocked groove 1216 in communication with the locking guiding groove 1214 and the locking guiding groove 1215. The locking groove 1213 is configured to allow an end of the limiting member 132 to hook, such that the sliding lock 121 is in the locked position. The unlocking groove 1216 is configured to accommodate the end of the limiting member 132 to enable the sliding lock 121 to be in the unlocked position. The unlocking guiding groove 1214 is configured to guide the end of the limiting member 132 to slide from the locking groove 1213 to the unlocking groove 1216, enabling the sliding lock 121 to move from the locked position to the unlocked position. The locking guiding groove 1215 is configured to guide the end of the limiting member 132 to slide from the unlocking groove 1216 into the locking groove 1213, enabling the sliding lock 121 to move from the unlocked position to the lock position.

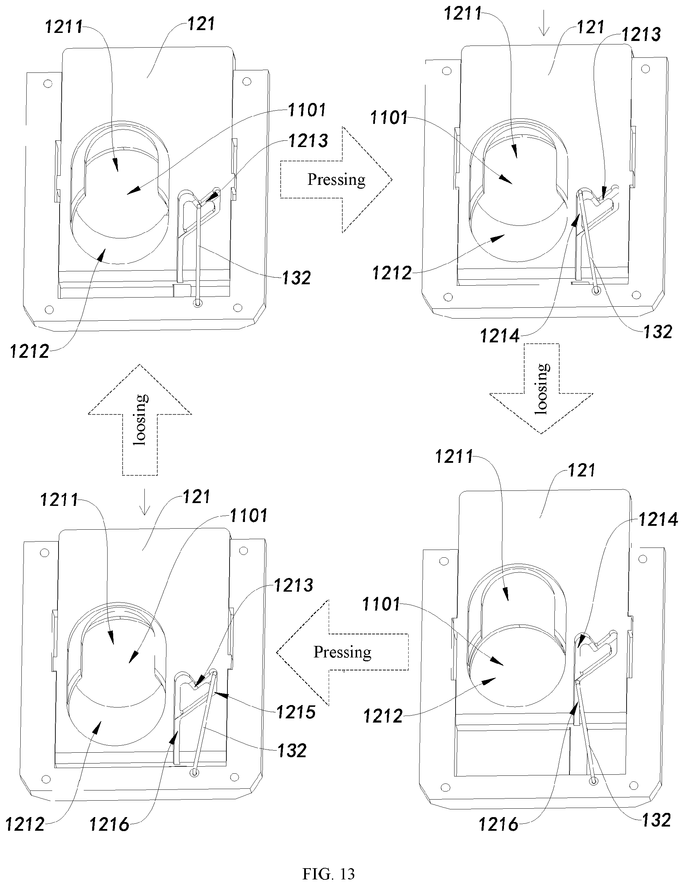

In other words, referring to FIG. 13, when the end of the limiting member 132 is hooked to the locking groove 1213, the sliding lock 121 is stably remained at the locking position, enabling the locking connecting device 1 to be stably in the locked state. When the sliding lock 121 is pressed, the end of the limiting member 132 will side from the locking groove 1213 into the unlocking guiding groove 1214, the end of the limiting member 132 and the locking groove 1213 are released from each other. The end of the limiting member 132 can slide into the unlocking guiding groove 1216 by guiding of the unlocking guiding groove 1214 after loosing the sliding lock 121, enabling the sliding lock 121 to automatically slide to the unlocked position by the resetting member 131. After pressing the sliding lock 121, the end of the limiting member 132 can slide from the unlocking groove 1216 into the locking guiding groove 1213 by the locking guiding groove 1215, such that the end of the limiting member 132 is hooked to the locking groove 1213, i.e., the sliding lock 121 can be stably remained at the locked position by the resetting member 131.

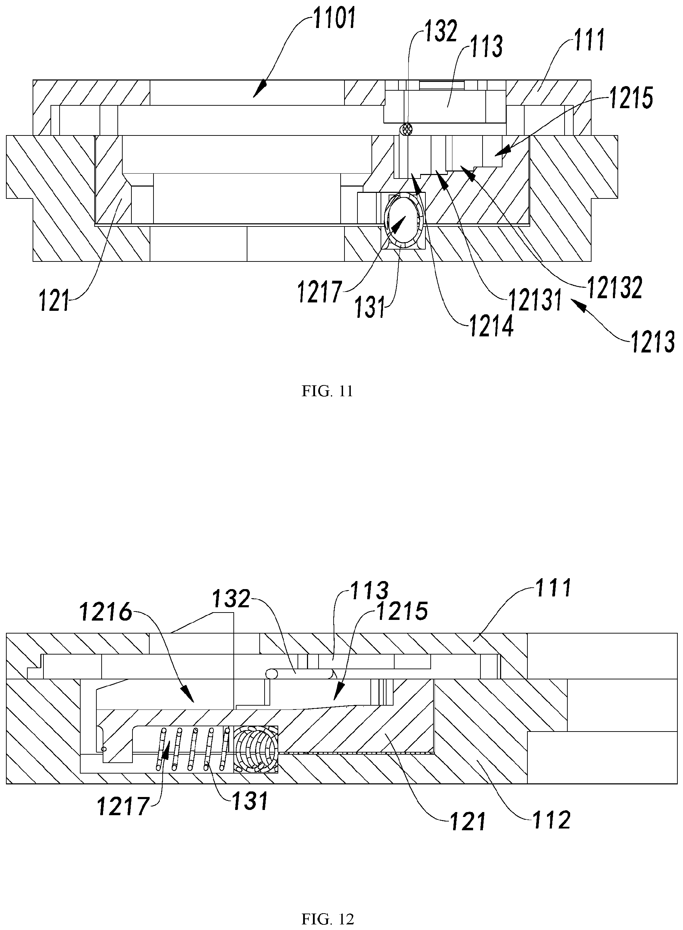

Alternatively, referring to FIGs. 8 and 11, the locking groove 1213 of the sliding lock 121 is implemented as a V-shaped groove, a bottom surface of the locking groove 1213 located on the sliding-out end 12131 of the locking groove 1213 is lower than that of the locking groove 1213 located on the sliding-in end 12132 of the locking groove 1213 to define a blocking step between the sliding-out end 12131 of the locking groove 1213 and the sliding-in end 12132 of the locking groove 1213, preventing the limiting member 132 from sliding towards the sliding-in end 12132 of the locking groove 1213. This is, when the sliding lock 121 located on the locked position is pressed, the limiting member 132 slides towards the sliding-out end 12131 of the locking groove 1213 until into the unlocking guiding groove 1214 of the locking groove 1213, thereby a problem of the limiting member 132 sliding towards the sliding-in end 12132 of the locking groove 1213 and a failure of unlocking can be avoided.

Alternatively, referring to FIG. 11, a bottom surface of the unlocking guiding groove 1214 of the sliding lock 121 adjacent to the sliding-out end 12131 of the locking groove 1213 is lower than that of the locking groove 1213 located on the sliding-out end 12131 of the locking groove 1213 to define a blocking step between the unlocking guiding groove 1214 and the locking groove 1213, thereby preventing the limiting member 132 from sliding from the unlocking guiding groove 1214 into the sliding-out end 12131 of the locking groove 1213, and facilitating ensuring the limiting member 132 and the locking groove 1213 being smoothly released from each other.

Referring to FIG. 11, a bottom surface of the locking guiding groove 1215 of the sliding lock 121 adjacent to the sliding-in end 12132 of the locking groove 1213 is higher than that of the sliding-in end 12132 of the locking groove 1213 to define a blocking step between the locking groove 1213 and the locking guiding groove 1215, thereby prevent the limiting member 132 from sliding from the sliding-in end 12132 of the locking groove 1213 into the locking guiding groove 1215, and facilitating ensuring the limiting member 132 to be smoothly locked by the locking groove 1213.

Alternatively, referring to FIGs. 10 and 12, a bottom surface of the unlocking guiding groove 1214 of the sliding lock 121 adjacent to the unlocking groove 1216 is higher than that of the unlocking groove 1216., and a bottom surface of the locking guiding groove 1215 of the sliding lock 121 adjacent to the unlocking groove 1216 is aligned with that of the unlocking groove 1216 to defined a blocking step between the unlocking guiding groove 1214 and a boundary between the unlocking groove 1216 and the locking guiding groove 1215. Thereby, it can prevent the limiting member 132 from sliding from the unlocking groove 1216 into the unlocking guiding groove 1214 and facilitate ensuring the limiting member 132 to be capable of sliding directly from the unlocking groove 1216 into the locking guide groove 1215.

Alternatively, referring to FIGs. 10 and 12, in the present disclosure, the locking guiding groove 1214 and the locking guiding groove 1215 are both implemented as depth gradient grooves. A size of the unlocking guiding groove 1214 gradually decreases from the locking groove 1213 to the unlocking groove 1216, and a size of the locking guiding groove 1215 gradually decrease from the unlocking guiding groove 1216 to the locking groove 1213. Therefore, it can facilitate ensuring the limiting member 132 to smoothly slide from the locking groove 1213 to the unlocking groove 1216 by guiding of the unlocking guiding groove 1214 and to smoothly slide from the unlocking guiding groove 1216 to the locking groove 1213 by guiding of the locking guiding groove 1215. Such that the sliding lock 121 can smoothly slide between the locked position and the unlocked position, thereby ensuring the locking connecting device 1 to be smoothly switched between the locked state and the unlocked state.

A size of the sliding-out end 12131 of the locking groove 1213 of the sliding lock 121 is equal to that of the sliding-in end 12132 of the locking groove 1213 of the sliding lock 121, and the size of the sliding-out end 12131 of the locking groove 1213 is greater than that of the sliding-in end 12132 of the locking groove 1213. Therefore, it can facilitate ensuring the limiting member 132 to slide from the sliding-in end 12132 of the locking groove 1213 into the locking groove 1213, and to slide from the sliding-out end 12131 of the locking groove 1213 out the locking groove 1213. Alternatively, in other embodiments, the sliding-out end 12131 of the locking groove 1213 and the sliding-in end 12132 of the locking groove 1213 can be implemented as depth gradient grooves. The size of the sliding-out end 12131 of the sliding-out end 12131 of the locking groove 1213 gradually increases along a direction towards the unlocking guiding groove 1214, and the size of the sliding-in end 12132 of the locking groove 1213 gradually increases along a direction away from the locking guiding groove 1215, facilitating guiding the limiting member 132 to slide from the sliding-in end 12132 of the locking groove 1213 into the locking groove 1213, and to slide from the sliding-out end 12131 of the locking groove 1213 out the locking groove 1213.

Referring to FIGs. 8 and 13, in the present disclosure, a heart-shaped passage are defined by the locking groove 1213, the unlocking guiding groove 1214, and the locking guiding groove 1215, such that the limiting member 132 can smoothly slide into the locking groove 1213, the unlocking guiding groove 1214, and the locking guiding groove 1215, which is conducive to ensuring the locking connecting device 1 to be smoothly switched between the locked state and the unlocked state.

According to the above embodiments, referring to FIGs. 6 and 7, the locking mechanism 132 of the switch 13 of the locking mechanism 10 can be implemented, but is not limited to, as a hook rod 1320 pivotally connected to the locking housing 11. A head part of the hook rod 1320 can be hooked by the locking groove 1213 of the sliding lock 121, and slide into the unlocking groove 1216, the unlocking guiding groove 1214, and the locking guiding groove 1215. A tail part of the hook rod 1320 also has a hook structure to be hooked by a pivot hole of the locking housing 11 to realize a pivot connection between the hook rod 1320 and the locking housing 11, thereby ensuring the hook rod 1320 to be releaseably hooked by the locking groove 1213 of the sliding lock 121.

Alternatively, referring to FIGs. 6 and 7, the resetting member 131 of the switch 13 of the locking mechanism 10 can be implemented, but not limited to, as a spring 1310. One end of the spring 1310 is fixedly connected to the locking housing 11, and the other end of the spring 1310 is fixedly connected to the sliding lock 121, so as to apply an elastic force on the sliding lock 121. Therefore, the sliding lock 121 can have a tendency to slide from the locked position to the unlocked position by the spring 1310. In the present disclosure, the spring 1310 can be implemented as a tension spring, such that the spring 1310 is stretched to accumulate elastic potential energy when the sliding lock 121 is pressed. Alternatively, the spring 1310 can be implemented as a compression spring, such that the spring 1310 is compressed to accumulate elastic potential energy when the sliding lock 121 is pressed. Alternatively, in other embodiments of the present disclosure, the resetting member 131 can be implemented as a rubber band, a magnetic component and so on, as long as the resetting member 131 can apply a required force on the sliding lock 121, which is not limited herein.

Alternatively, referring to FIGs. 6, 7 and 10, the sliding lock 121 is further provided with a spring cavity 1217 configured to accommodate the spring 1310, such that the spring 1310 is deformed in the spring cavity 1217, facilitating assembling the spring 1310, and effectively protecting the spring 1310 from external interference. The sliding lock 121 and the locking housing 11 are both provided with a limiting column matching with the spring 1310, such that two ends of the spring 1310 are sleeved on the limiting column of the sliding lock 121 and the limiting column of the locking housing 11, respectively, thereby simplifying an assembly of the locking connecting device 1.

Alternatively, referring to FIGs. 7 and 10, the spring cavity 1217 and the unlocking groove 1216 are symmetrically disposed on two opposite sides of the sliding lock 121. The spring cavity 1217 and the unlocking groove 1216 both extend along a sliding direction of the sliding lock 121, thereby ensuring the sliding lock 121 to be capable of smoothly sliding into the unlocked position by the spring 1310.

According to the above embodiments of the present disclosure, referring to FIGs. 7 and 8, a block 1218 is disposed on and protrudes from the sliding lock 121 of the locking mechanism 10. The locking housing 11 is provided with a limiting groove 1103 matching with the limiting block 1218. The limiting groove 1103 extends along the sliding direction of the sliding lock 121. The block 1218 of the sliding lock 121 is restricted by and slidably inserts into the limiting groove 1103 of the locking housing 11 to prevent the sliding lock 121 from detaching from the sliding cavity 1102 of the locking housing 11, thereby ensuring the sliding lock 121 to be stably remained at the unlocked position.

Alternatively, referring to FIGs. 6 and 7, the locking housing 11 of the locking mechanism 10 can include a first housing 111 and a second housing 112. The first housing 111 can be mounted on the second housing 112 in a releasable manner to defined a sliding cavity 1102 between the first housing 111 and the second housing 112. Such that the switch 13 is accommodated in the sliding cavity 1102, preventing the switch 13 from being disturbed by external environment, and ensuring the switch 13 to normal work. The inserting cavity 1101 of the locking housing 11 extends through the first housing 111 and the second housing 112, such that the fitting member 20 can insert into the inserting cavity 1101 and be releasably snap-fitted to the sliding lock 121.

Alternatively, referring to FIGs. 7 and 10, the locking housing 11 can further include an elastic pressing plate 113 disposed on the first housing 111. The elastic pressing plate 113 titles towards the sliding lock 121 to press the limiting member 132, facilitating ensuring the limiting member 132 to be stably hooked with the sliding lock 1213, to stably slide along the unlocking groove 1216, the unlocking guiding groove 1214 and the locking guiding groove 1215.

Alternatively, referring to FIG. 10, the elastic pressing plate 113 of the locking housing 11 correspondingly presses the head part of the hook rod 1320, such that the head part of the hook rod 1320 is in tight contact with the bottom surface of the locking groove 1213, the bottom surface of the unlocking guiding groove 1214, the bottom surface of the locking guiding groove 1215, and a bottom surface of the unlocking groove 1216. Thereby it can ensure the head part of the hook rod 1320 to be effectively hooked with the locking groove 1213 or to be released from the locking groove 1213, enabling the locking connecting device 1 to be effectively switched between the locked state and the unlocked state, and preventing a failure of switching between the locked state and the unlocked state.

Referring to FIGs. 6 and 9, in the present disclosure, the elastic pressing plate 113 and the first housing 111 can be an integral structure to reduce a production cost of the locking housing 11. Alternatively, in other embodiments of the present disclosure, the elastic pressing plate 113 and the first housing are a separate structure. For example, the elastic pressing plate 113 can be implemented as a metal plate fixed on the first housing 111, which is not limited herein.

According to the above first embodiment of the present disclosure, referring to FIGs. 1 and 2, in the present disclosure, the locking mechanism 10 of the locking connecting device 1 is located on a top or a side of the first container 70. The fitting member 20 is located on a bottom or a side of the second container 80. When the fitting member 20 is snap-fitted to the locking mechanism 10, the second container 80 can be stably stacked on the first container 70.

For example, referring to FIGs. 1 and 2, the first container 70 of the combined container can include a first container body 71 with a first opening and a first cover body 72 on the first container body 71. Correspondingly, the second container 80 can include a second container body 81 provided with a second opening, and a second cover body 82 on the second container body 81. The locking mechanism 10 of the locking connecting device 1 is mounted on a top wall of the first cover body 72. The fitting member 20 is correspondingly fixed on a bottom wall of the second container body 81. When the second container 80 is stacked on the first cover body 70, the locking mechanism 10 of the locking connecting device 1 can be snap-fitted the fitting member 20 from a top to bottom direction, so as to realize stable locking and connection between the first container 70 and the second container 80, and facilitating storing and transporting. In the present disclosure, the fitting member 20 and the second container body 81 can be an integral structure, or the fitting member 20 can be fixed on the second container body 81 through screwing, riveting, and so on.

Alternatively, in the first embodiment of the present disclosure, referring to FIGs. 2 and 4, the combined container can include two locking connecting devices 1. The two locking connecting devices 1 are symmetrically disposed between the first container 70 and the second container 80, such that the first container 70 and the second 80, which are stacked on a top of each other, are reliably locked together by the two locking connecting devices 1. In other words, the two locking connecting devices 1 are reversely mounted on two opposite sides of the first container 70 and the second container 80, respectively, such that the two locking connecting devices 1 are switched between the locked state and the unlocked state by pressing the locking connecting device 121 of the locking mechanism 10 of the two locking connecting devices 1 in opposite directions.

In the above embodiments of the present disclosure, for example, the two locking connecting devices 1 are switched between the unlocked state and the locked state by sliding the lock cylinder 12 of the locking mechanism 10, which is merely used as an example. In other embodiments of the present disclosure, the two locking connecting devices 1 can be switched between the unlocked state and the locked state by rotating or other operations.

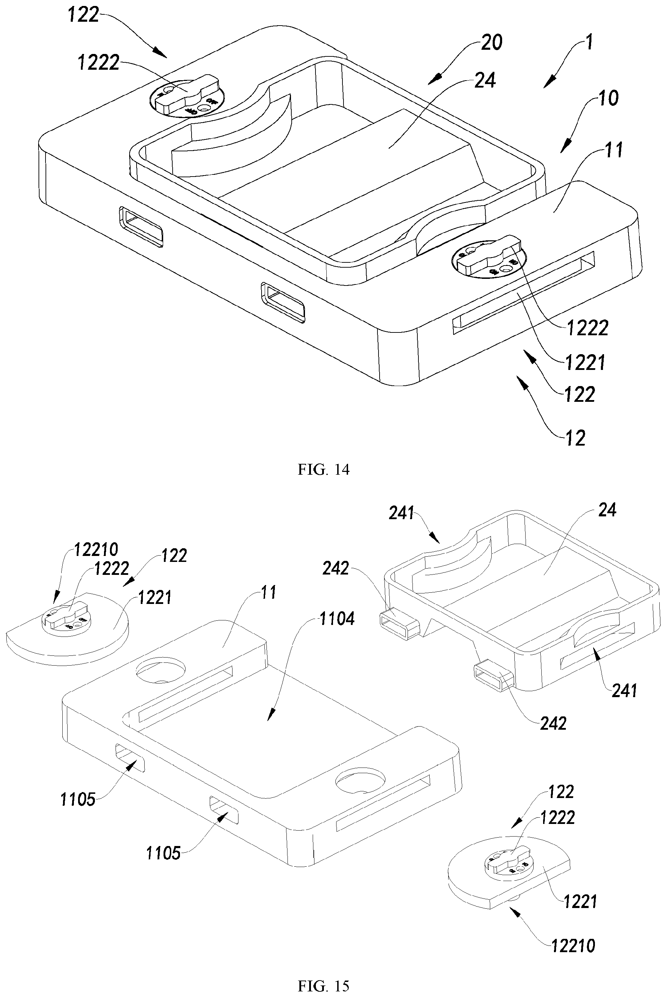

For example, FIGs. 14 to 16 are illustrated an alternative embodiment of the locking connecting device 1 in the above first embodiment of the present disclosure. The lock cylinder 12 of the locking mechanism 10 is implemented as a rotatable locking component 122. The rotatable locking component 122 includes a notch disk 1221 rotatably disposed on the locking housing 11 and a knob connected to the notch disk 1221, such that the notch disk 1221 is driven by the knob 1222 to rotate between the locked position and the unlocked position relative to the locking housing 11. Correspondingly, the fitting member 20 is implemented as a lock groove seat 24. This is, when the knob 1222 of the rotatable locking component 122 is driven to rotate to drive the notch disk 1221 to rotate to the locked position, a notch 12210 of the notch disk 1221 is away from the lock groove 241 of the lock groove seat 24, and a part of the notch disk 1221 is snap-fitted to the lock groove 241 of the lock groove seat 24, so as to realize locking between the locking mechanism 10 and the fitting member 20. Therefore, the locking connecting device 1 is in the locked state. When the knob 1222 is driven to rotate to drive the notch disk 1221 to rotate to the unlocked position, the notch 12210 of the notch disk 1221 faces the lock groove 241 of the lock groove seat 24, such that the notch disk 1221 and the lock groove seat 24 are released from each other, so as to release the locking mechanism 10 from the fitting member 20. Therefore, the locking connecting device 1 is in the unlocked state.

Alternatively, referring to FIGs. 14 and 15, one locking mechanism 10 can include two rotatable locking components 122 arranged at interval. The lock groove seat 24 is capable of being disposed between the two rotatable locking components 122, such that two lock grooves 241 of the lock groove seat 24 corresponds to the two rotatable locking components 122 one by one, respectively. This is, the two rotatable locking components 122 can be snap-fitted to the lock groove seat 24 from two opposite sides of the lock groove seat 24, thereby realizing stable locking of the locking connecting device 1. The locking housing 11 of the locking mechanism 10 is detachably mounted on a top of the first container 70. Correspondingly, the lock groove seat 24 of the fitting member 20 is correspondingly disposed on a bottom of the second container 80. Therefore, the first container 70 and the second container 80 are reliably locked together by the locking connecting device 1.

Alternatively, referring to FIG. 15, the locking housing 11 of the locking mechanism 10 is provided with a sliding groove 1104 matching with the lock groove seat 24. The two rotatable locking components 122 are symmetrically disposed on a left side and a right side of the sliding groove 1104, respectively, so as to be snap-fitted from the left side and the right side of the lock groove seat 24.

Alternatively, referring to FIG. 15, the locking housing 11 of the locking mechanism 10 is further provided with a snapping hole 1105. A back side of the lock groove seat 24 is provided with a snapping column 242 matching with the snapping hole 1105. When the lock groove seat 24 slides into the sliding groove 1104 of the locking housing 11, the snapping column 242 of the lock groove seat 24 inserts into the snapping hole 1105 of the locking housing 11, thereby the locking housing 11 being snapped from the back side of the lock groove seat 24, being cooperated with an engagement between the two rotatable locking components 122 and the lock groove seat 24, and resulting in further improving locking stability of the locking connecting device 1.

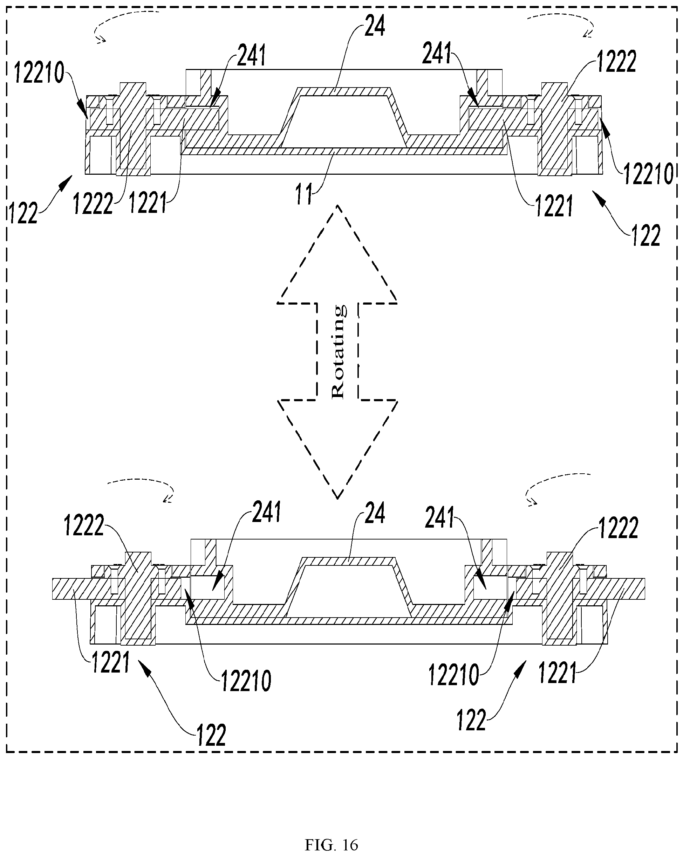

Alternatively, referring to FIG. 16, the notch 12210 of the notch disk 1221 of the locking mechanism 10 is implemented as a flat notch, such that when the notch 12210 of the notch disk 1221 faces the lock groove 241 of the lock groove seat 24, a physical part of the notch disk 1221 will not insert into the lock groove 241 of the lock groove seat 24, thereby ensuring the locking mechanism 10 to be totally disengaged with the fitting member 20. When the notch disk 1221 is driven to rotate 180° to enable the notch 12210 of the notch disk 1221 to depart from the lock groove 241 of the lock groove seat 24, other physical part of the notch disk 1221 can insert into the lock groove 241 of the lock groove seat 24 as much as possible, thereby ensuring the locking mechanism 10 to be reliably engaged with the fitting member 20.

In other embodiments of the present disclosure, the number of the locking connecting device 1 in the combined container is not limited to two, and can be implemented as one or more. In addition, the locking connecting device 1 can be disposed on any position between the first container 70 and the second container 80, as long as the first container 70 is locked on and connected to the second container 80 in a releasable manner. In the present disclosure, the combined container is not limited to two containers, i.e., in the present disclosure, the combined container can include three or more containers, as long as one locking connecting device 1 is arranged to lock two containers adjacent to each other in a releasable manner, which falls within the scope of protection of the present disclosure. Other two containers adjacent to each other can be locked by the other locking connecting device 1 or generally methods. Alternatively, the two adjacent containers can be safely stacked with each other by a cooperation between the locking connecting device 1 and other connection methods.

For example, FIG.s 17 to 19 are illustrated a combined container in a second embodiment of the present disclosure. Compared with the combined container in the above first embodiment of the present disclosure, differences of the combined container in the second embodiment of the present disclosure are as follows: two locking connecting devices 1 are disposed on a same side of the first container 70 and the second container 80 in a same direction, such that the sliding lock 121 of the locking mechanism 10 of the two locking connecting device 1 are pressed in a same direction to enable the locking connecting device 1 to be switched between the locked state and the unlocked state.

Alternatively, in order to improve stacking stability between the first container 70 and the second container 80, in the present disclosure, a part of the second container body 81 of the second container 80 is capable of being embedded into the first cover body 72 of the first container 70, thereby restricting a relative position between the first container 70 and the second container 80 from a front to back direction and a left to right direction. In the present disclosure, the locking connecting device 1 restricts the relative position between the first container 70 and the second container 80 from a top to bottom direction.

According to the above embodiments of the present disclosure, the combined container con further includes an auxiliary mechanism 50. The auxiliary mechanism 50 is disposed between the first container 70 and the second container 80 to assist the locking connecting device 1 to releasably fix on the first container 70, facilitating ensuring stable stacking between the second container 80 and the first container 70.

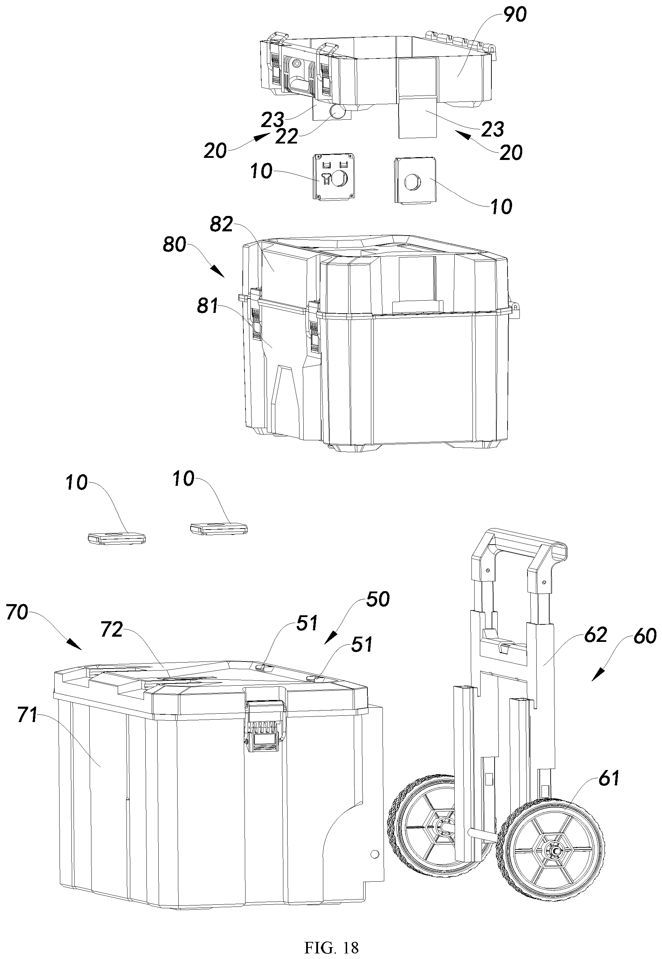

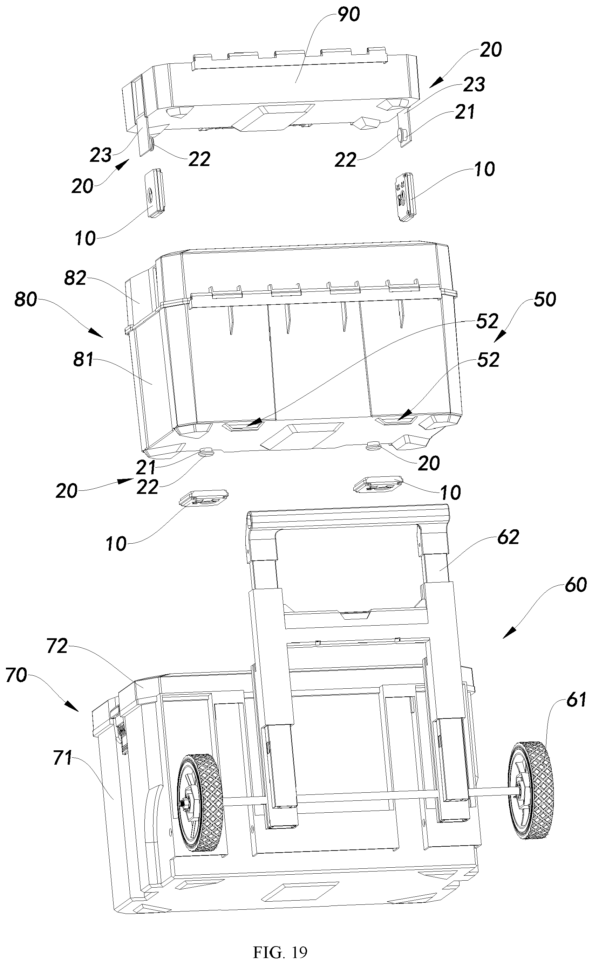

Alternatively, referring to FIGs. 18 and 19, the auxiliary mechanism 50 can include a first block 51 disposed on the first cover body 72 and a second snapping groove 52 correspondingly disposed on the second container body 81. When the second container 80 is stacked on the first container 70, the first block 51 is snapped into the second snapping groove 52, thereby further restricting the relative position between the first container 70 and the second container body 80 from the top to bottom direction. In the present disclosure, the fitting member 20 and the second snapping groove 52 are located on two opposite sides of the second container body 81, respectively. In the present disclosure, the locking mechanism 10 and the first block 51 are correspondingly disposed on two opposite sides of the first cover body 72, respectively, which is conducive to realizing fixing and stacking between the first container 70 and the second container 80 by cooperation between the locking and connecting of the locking connecting device 1 and snapping between the first block 51 and the second groove 52.

In other embodiments of the present disclosure, the auxiliary mechanism 50 can be implemented as various bucks or locks, as long as the auxiliary mechanism 50 can assist the locking connecting device 1 in firmly stacking the containers together, which is not limited herein.

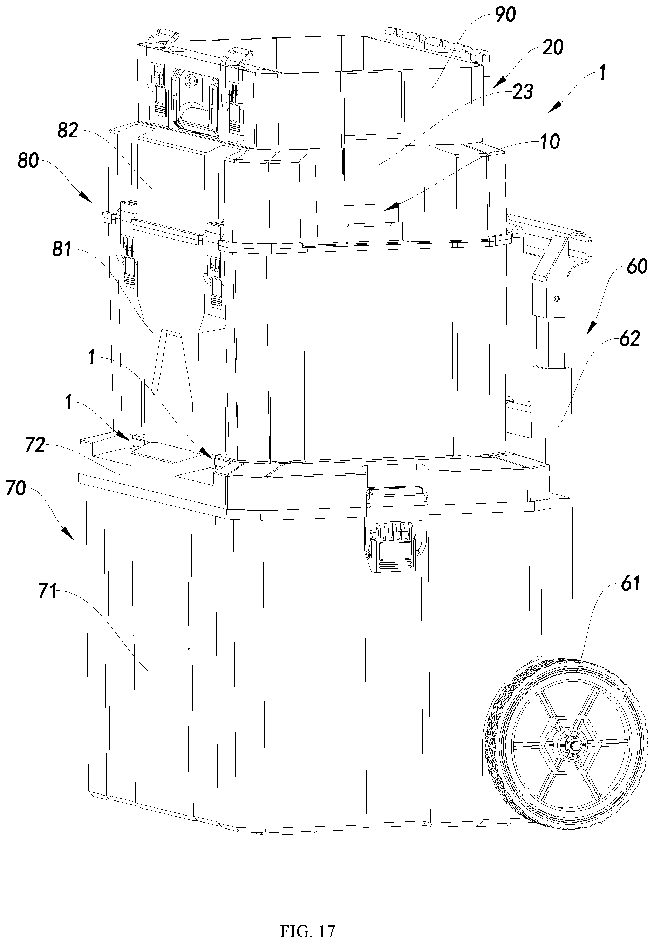

According to the above second embodiment of the present disclosure, referring to FIGs. 17 and 18, the combined container can further include a third container 90. the third container 90 is stacked on the second container 80. The locking connecting device 1 is disposed between the third container 90 and the second container 80, such that the second container 80 is locked with the third container 90 by the locking connecting device 1.

Alternatively, the locking mechanism 10 of the locking connecting device 1 is mounted on a side wall of the second cover body 82 of the second container 80. The fitting member 20 of the locking connecting device 1 is correspondingly mounted on a side wall of the third container 90. Therefore, the locking mechanism 10 is engaged with the fitting member 20 from a direction of a side of the locking mechanism 10 (such as the left to right direction and the front to back direction), thereby realizing locking between the second container 80 and the third container 90.

Alternatively, the fitting member 20 is pivotally connected to a side wall of the third container 90, such that the fitting member 20 pivotally rotates relative to the third container 90 to insert into the corresponding locking mechanism 10 from a direction of a side of the second container 80 to be engaged with the locking mechanism 10 after the third container 90 being stacked on the second container 80.

In particular, referring to FIGs. 17 and 19, the fitting member 20 further includes a connecting arm 23. One end of the connecting arm 23 is pivotally connected to a side wall of the third container 90, and the other end of the connecting arm 23 is fixedly connected to the tail part 21 of the fitting member 20, such that the head part 22 of the fitting member 20 protrudes from the connecting arm 23, facilitating ensuring the head part 22 of the fitting member 20 to insert into the inserting cavity 1101 of the locking housing 11 of the locking mechanism 10 and be locked by the lock cylinder 12 of the locking mechanism 10.

Alternatively, the side wall of the third container 90 is further provided with a groove matching with the connecting arm 23. Therefore, the connecting arm 23 of the fitting member 20 is capable of being accommodated in a groove of the third container 90 after the fitting member 20 being detached from the locking mechanism 10, so as to prevent the connecting arm 23 from protruding downwards from the third container 90 to affect a displacement and a use of the third container 90.

In the present disclosure, the third container 90 can be implemented as a container without a cover, or can be implemented as a container with a cover. Similarly, in the present disclosure, the first container 70 and the second container 80 can also be implemented as a container without a cover. At least two locking mechanisms 10 of at least two locking connecting devices 1 are mounted on a side wall of the first container body 71 and a side wall of the second container body 81, respectively, such that when the second container body 81 and the third container 90 are stacked on the corresponding first container body 71 and the second container body 81 by the at least two locking connecting devices 1, the second container body 81 and the third container 90 are defined as a cover of the first container 70 and a cover of the second container 80, respectively, to cover the opening of the first container body 71 and the opening of the second container body 81, respectively, facilitating simplifying a structure of the combined container, and reducing a cost.

In addition, in the above second embodiment of the present disclosure, the second container 80 and the third container 90 can be locked, but are not be limited to, by two locking connecting devices 1. The two locking connecting devices 1 are correspondingly disposed on the left side and the right side or the front side of the second container 80 and the back side of the second container 80 and the third container 90, respectively, thereby the second container 80 can be safely stacked on the third container 90. Alternatively, in other embodiment of the present disclosure, merely one locking connecting device 1 can be disposed between the second container 80 and the third container 90, and cooperated with the engagement of the auxiliary mechanism 50 to be realize safe stacking between the second container 80 and the third container 90.

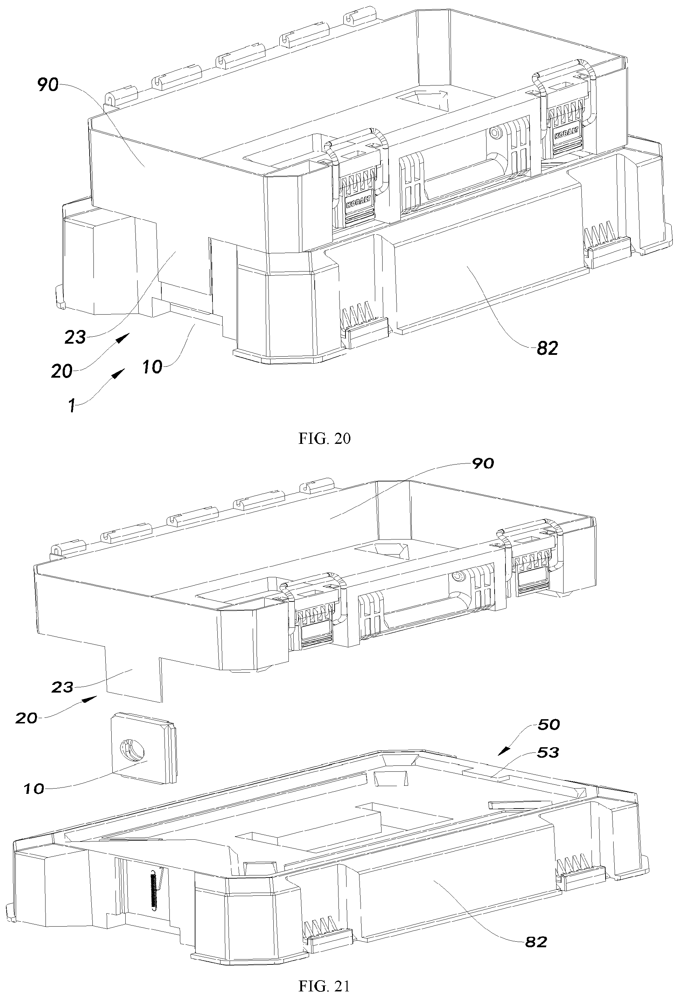

For example, FIGs. 20 to 22 are illustrated an alternative embodiment of the combined container in the above second embodiment of the present disclosure. The auxiliary mechanism 50 further includes a second block 53 disposed on the second cover body 82 and a third groove 54 disposed on the third container and matching with the second block 53. When the third container 90 is stacked on the second container 80, the second block 53 of the second container 80 is snapped into the third groove 54 of the third container 90. Merely one locking connecting device 1 is required between the second container 80 and the third container 90 to realize safe stacking between the second container 80 and the third container 90.

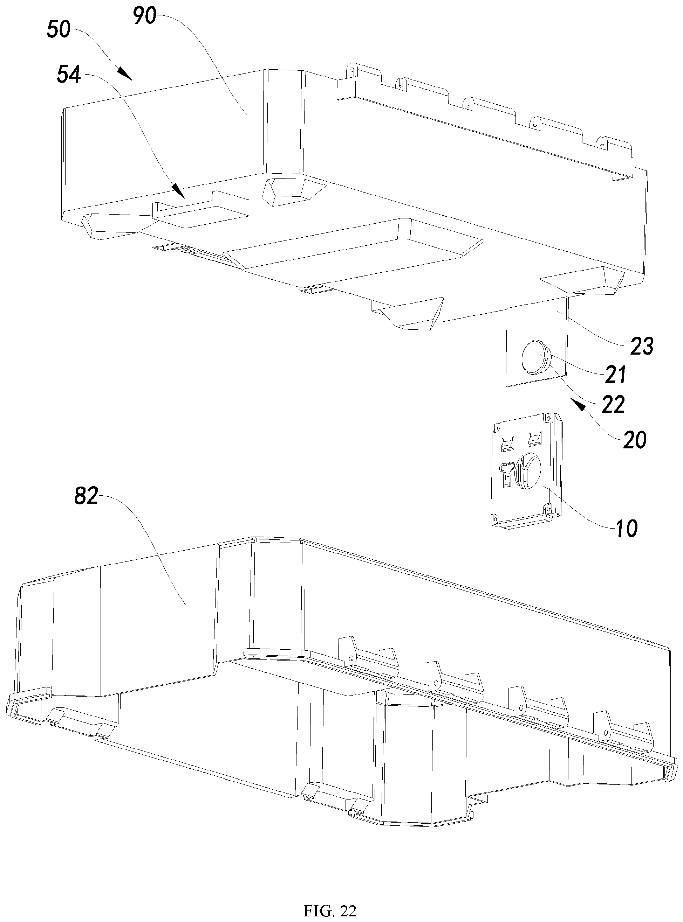

Alternatively, referring to FIGs. 21 and 22, the connecting arm 23 of the fitting member 20 of the locking connecting device 1 is capable of being fixed on the side wall of the third container 90. When the third container 90 is stacked on the second container 80, it is required to push the third container 90 horizontally to the second container 80, such that the head part 22 of the fitting member 20 inserts into the inserting cavity 1101 of locking mechanism 10 to realize the locking between the fitting member 20 and the locking mechanism 10 while the second block 53 is snapped into the third container 54.

In the second embodiment of the present disclosure, referring to FIGs. 17 and 18, the combined container can further include a push-pull mechanism 60. The push-pull mechanism 60 includes a roller 61 disposed on the first container 70 and a pulling rod 62 correspondingly disposed on the first container 70, such that the combined container is implemented as a pulling-rod container, such as a rolling suitcase and so on, which is conducive to being carried.

In addition, although the combined container in the above embodiments of the disclosure are illustrated features and advantages of the disclosure by using a stacked box as an example, it is merely an example. It can be understood that in other embodiments of the present disclosure, the combined container can be implemented as a stacking drawer cabinet and so on.

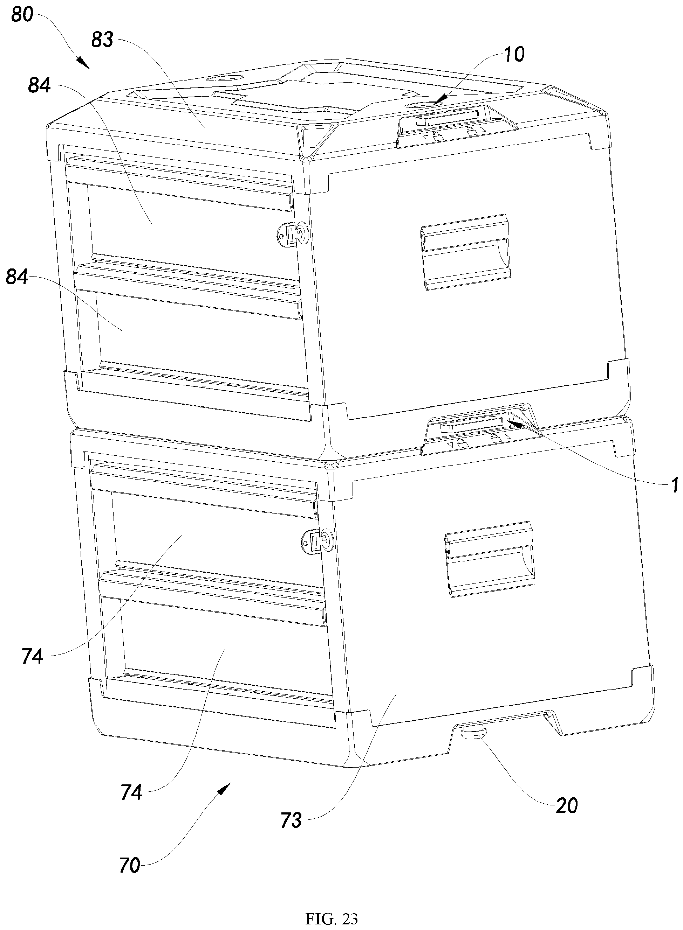

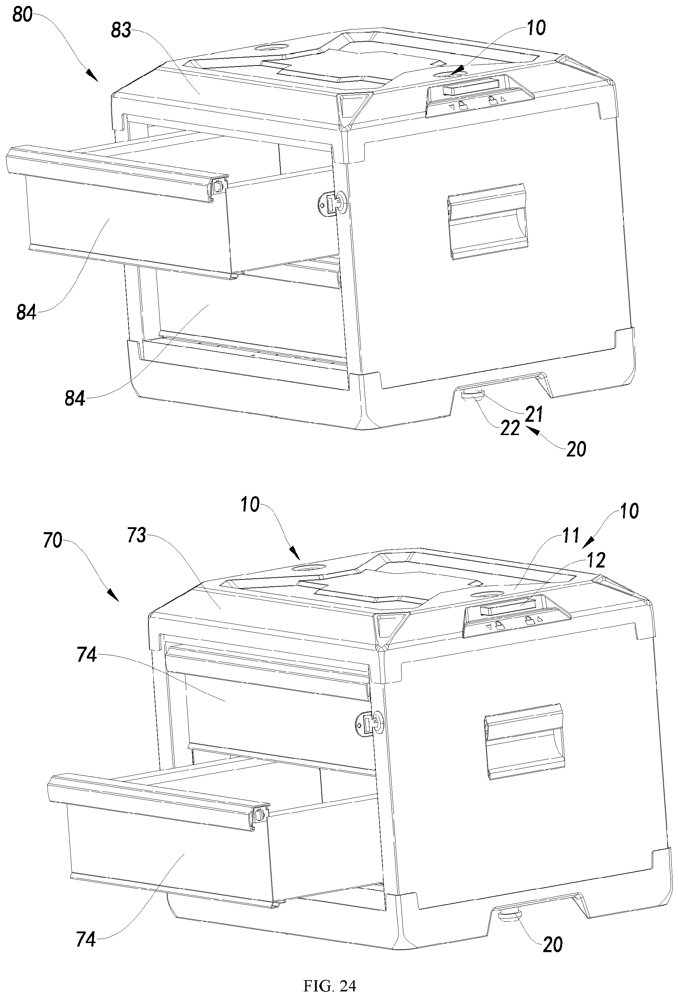

For example, FIGs. 23 to 24 are illustrated a combined container in the third embodiment. Compared with the combined container in the above first embodiment of the present disclosure, differences of the combined container in the second embodiment of the present disclosure are as follows: the first container 70 can include a first cabinet body 73 and a first drawer 74 slidably arranged on the first cabinet body 73. The second container 80 can include a second cabinet body 83 and a second drawer 84 slidably disposed on the second cabinet body 83. This is, the two locking connecting devices 1 are symmetrically disposed between the first container 70 and the second container 80, such that the two locking connecting devices 1 are switched between the locked state and the unlocked state by pressing the sliding locks 121 of the locking mechanism 10 of the two locking connecting device 1 in an opposite direction.

Alternatively, the locking housing 11 of the locking mechanism 10 in the locking connecting device 1 and the first container 73 are an integral structure, and the fitting member 20 of the locking connecting device 1 and the second container 83 are an integral structure, which is conducive to reducing difficulty of assembling the locking connecting device 1, and improving locking stability between the first container 70 and the second container 80.

Alternatively, a plurality of locking mechanisms 10 are disposed on a top of the first cabinet body 73 and a top of the second cabinet body 83, respectively. Correspondingly, a plurality of fitting member 20 are correspondingly disposed on a bottom of the first cabinet body 73 and a bottom of the second cabinet body 83, respectively. This is, the second container 80 can be lockably stacked on the first container 70, or lockably stacked down the first container 70. In addition, the plurality of first container 70 or the plurality of second container 80 can be subsequently stacked with each other.

In the third embodiment of the present disclosure, although each container shown in the attached diagram is illustrated as including two drawers, it is merely an example. In other embodiments of the present disclosure, each container can include one or more drawer, which is not limited in the present disclosure.

The various technical features of the above embodiments can be combined in any way. In order to make the description concise, not all possible combinations of the various technical features in the above embodiments have been described.

The above embodiments only express several embodiments of the present disclosure, and their descriptions are more specific and detailed, but should not be understood as limiting the scope of the disclosure. It should be pointed out that for ordinary skill in the art, several modifications and improvements can be made without departing from the invention as defined by the claims.

## Claims

1. A combined container, comprising:
a first container (70);
a second container (80);
a locking connecting device (1) configured to combine the first container (70) and the second container (80), wherein the locking connecting device (1) is correspondingly disposed between the first container (70) and the second container (80) and configured such that the second container (80) can be releasably locked on and connected to the first container (70) in a releasable manner;
wherein the locking connecting device (1) comprises:
a fitting member (20) disposed on the second container (80); and
a locking mechanism (10), wherein the locking mechanism (10) is capable of being operatably disposed on the first container (70) and configured to be releasably snap-fitted to the fitting member (20), enabling the locking connecting device (1) to switch between a locked state and an unlocked state, wherein when the locking mechanism (10) is operated to enable the locking connecting device (1) to be in the locked state, the locking mechanism (10) and the fitting member (20) are snap-fitted to each other to prevent the first container (70) and the second container (80) combined with each other from being separated from each other; and when the locking mechanism (10) is operated to enable the locking connecting device (1) to be in the unlocked state, the locking mechanism (10) and the fitting member (20) are released from each other to enable the first container (70) and the second container (80) combined with each other to be separated from each other;
**characterized in that**
the locking mechanism (10) comprises a locking housing (11) detachably disposed on the first container (70) and a lock cylinder (12) movably disposed in the locking housing (11), the lock cylinder (12) is configured to move between a locked position and an unlocked position, wherein when the lock cylinder (12) is driven to move to the locked position relative to the locking housing (11), the lock cylinder (12) is configured to be snap-fitted to the fitting member (20); and when the lock cylinder (12) is driven to move to the unlocked position relative to the locking housing (11), the lock cylinder (12) is configured to be released from the fitting member (20);
the lock cylinder (12) of the locking mechanism (10) is a sliding lock (121) slidably disposed in the locking housing (11), the sliding lock (121) is provided with a locking hole (1211) configured to be snap-fitted to the fitting member (20) and an unlocking hole (1212) configured to be released from the fitting member (20), the locking hole (1211) is in communication with the unlocking hole (1212) along a sliding direction of the sliding lock (121), wherein when the sliding lock (121) slides between the locked position and the unlocked position, the fitting member (20) is capable of sliding between the locking hole (1211) of the sliding lock (121) and the unlocking hole (1212) of the sliding lock (121);
a size of a head part of the fitting member (20) is greater than that of the locking hole (1211) of the sliding lock (121), and less than that of the unlocking hole (1212) of the sliding lock (121);
the locking housing (11) of the locking mechanism (10) is provided with an inserting cavity (1101) and a sliding cavity (1102) in communication with each other, the sliding lock (121) is capable of slidably inserting into the sliding cavity (1102) of the locking housing (11), and the fitting member (20) is capable of inserting into the inserting cavity (1101) of the locking housing (11) to be releasably snap-fitted to the sliding lock (121);
the locking mechanism (10) further comprises a switch (13), and the switch (13) is correspondingly disposed between the locking housing (11) and the sliding lock (121) and configured to enable the sliding lock (121) to slide and switch (13) between the locked position and the unlocked position after the sliding lock (121) is pressed; and
the switch (13) comprises a resetting member (131) and a limiting member (132), the resetting member (131) is disposed between the locking housing (11) and the sliding lock (121), and the resetting member (131) is configured to apply a force opposite to a pressing direction on the sliding lock (121); the limiting member (132) is disposed between the locking housing (11) and the sliding lock (121), the limiting member (132) is configured to releasably restrict the sliding lock (121); wherein when the sliding lock (121) is restricted by the limiting member (132), the sliding lock (121) is capable of being remained at the locked position by the resetting member (131) and the limiting member (132); and after a restriction between the limiting member (132) and the sliding lock (121) is released, the sliding lock (121) is capable of automatically sliding to the locked position by the resetting member (131);
wherein a limiting block (1218) is disposed on and protrudes from the sliding lock (121), the locking housing (11) is provided with a limiting groove (1103) matching with the limiting block (1218), the limiting groove (1103) of the locking housing (11) extends along a sliding direction of the sliding lock (121), and the limiting block (1218) of the sliding lock (121) is capable of being restricted by and slidably inserting into the limiting groove (1103) of the locking housing (11);
the locking housing (11) comprises a first housing (111) and a second housing (112), the first housing (111) is detachably mounted on the second housing (112) to define a sliding cavity (1102) between the first housing (111) and the second housing (112), and the inserting cavity (1101) of the locking housing (111) extends through the first housing (111) and the second housing (112); and
the locking housing (11) further comprises an elastic pressing plate (113) disposed on the first housing (111), and the elastic pressing plate (113) tilts towards the sliding lock (121) to press the limiting member (132).

2. The combined container of claim 1, wherein the sliding lock (121) is further provided with a locking groove (1213) hooked by an end of the limiting member (132), an unlocking guiding groove (1214) in communication with a sliding-out end of the locking groove (1213), a locking guiding groove (1215) in communication with a sliding-in end of the locking groove (1213), and an unlocking groove (1216) in communication with both the unlocking guiding groove (1214) and the locking guiding groove (1215), the unlocking guiding groove (1214) is configured to guide the end of the limiting member (132) to slide from the locking groove (1213) to the unlocking groove (1216), and the locking guiding groove (1215) is configured to guide the end of the limiting member (132) to slide from the unlocking groove (1216) to the locking groove (1213).

3. The combined container of claim 2, wherein the locking groove (1213) is in a V shape, and a bottom surface of the locking groove (1213) located on the sliding-out end of the locking groove (1213) is lower than that of the locking groove (1213) located on the sliding-in end of the locking groove (1213).

4. The combined container of claim 3, wherein a bottom surface of the unlocking guiding groove (1214) adjacent to the sliding-out end of the locking groove (1213) is lower than that of the locking groove (1213) located on the sliding-out end of the locking groove (1213); or
a bottom surface of the locking guiding groove (1215) adjacent to the sliding-in end of the locking groove (1213) is higher than that of the locking groove (1213) located on the sliding-in end of the locking groove (1213); or,
a bottom surface of the unlocking guiding groove (1214) adjacent to the unlocking groove (1216) is higher than that of the unlocking groove (1216), and a bottom surface of the locking guiding groove (1215) adjacent to the unlocking groove (1216) is not higher than that of the unlocking groove (1216); or,
a size of the unlocking guiding groove (1214) decreases from the locking groove (1213) to the unlocking groove (1216), and a size of the locking guiding groove (1215) decreases from the unlocking groove (1216) to the locking groove (1213); or,
the locking groove (1213) of the sliding lock (121), and a heart-shaped passage is defined by the unlocking guiding groove (1214) of the sliding lock (121), and the locking guiding groove (1215) of the sliding lock (121).

5. The combined container of claim 2, wherein the limiting member (132) is pivotally connected to a hook rod (1320) of the locking housing (11) and the resetting member (131) is a spring (1310).

6. The combined container of claim 1, wherein the locking mechanism (10) of the locking connecting device (1) is disposed on the first container (70), and the fitting member (20) of the locking connecting device (1) is correspondingly disposed on the second container (80), such that when the second container (80) is stacked on the first container (70), the locking mechanism (10) of the locking connecting device (1) and the fitting member (20) are snap-fitted to each other to form a combined container; or
the first container (70) comprises a first container body (71) and a first cover body (72) covered on the first container body (71); the second container (80) comprises a second container body (81) and a second cover body (82) covered on the second container body (81); and wherein the locking mechanism (10) of the locking connecting device (1) is mounted on the first cover body (72), and the fitting member (20) of the locking connecting device (1) is correspondingly disposed on the second container body (81), such that the second container body (81) is releasably locked on the first cover body (72) by the locking connecting device (1); or,
the first container (70) comprises a first cabinet body (73) and a first drawer (74) that is slidably arranged in the first cabinet body (73); the second container (80) comprises a second cabinet body (83) and a second drawer (84) that is slidably arranged in the second cabinet body (83); and wherein the locking mechanism (10) of the locking connecting device (1) is disposed on the first cabinet body (73), and the fitting member (20) of the locking connecting device (1) is disposed on the second cabinet body (83), such that the first cabinet body (73) is releasably locked on the second cabinet body (83) by the locking connecting device (1); or,
the combined container further comprises a push-pull mechanism (60), the push-pull mechanism (60) comprises a roller (61) disposed on the first container (70) and a pulling rod (62) correspondingly disposed on the first container (70).

7. The combined container of claim 1, wherein the first container (70) comprises a first container body (71) provided with a first opening; the second container (80) comprises a second container body (81) provided with a second opening, wherein the locking mechanism (10) of the locking connecting device (1) is disposed on the first container body (71), and the fitting member (20) of the locking connecting device (1) is correspondingly disposed on the second container body (81), such that the second container body (81) is releasably locked on the first container body (71) by the locking connecting device (1); further optionally,
when the second container body (81) is locked on the first container body (71) by the locking connecting device (1), the first opening of the first container body (71) is covered by the second container body (81); further optionally,
the first container (70) further comprises a first cover body (72) covered on the first opening of the first container body (71); and the second container (80) further comprises a second cover body (82) covered on the second opening of the second container body (81), such that the second container body (81) of the second container (80) is stacked on the first cover body (72) of the first container (70).

8. The combined container of claim 1, further comprising at least one pair of locking connecting devices (1), wherein at least two locking mechanisms (10) of the at least one pair of locking connecting devices (1) are correspondingly disposed on two sides of the first container (70), respectively, and at least two fitting members (20) of the at least one pair of locking connecting devices (1) are correspondingly disposed on two sides of the second container (80), respectively; further optionally,
the at least two locking mechanisms (10) of the at least one pair of locking connecting devices (1) are disposed on a side of the first container (70); and the at least two fitting members (20) of the at least one pair of locking connecting devices (1) are pivotably disposed on a side of the second container (80); or, the at least two locking mechanisms (10) of the at least one pair of locking connecting devices (1) are disposed on a top of the first container (70); and the at least two fitting members (20) of the at least one pair of locking connecting devices (1) are fixedly disposed on a bottom of the second container (80).

9. The combined container of claim 1, further comprising at least one locking connecting device (1), wherein at least one locking mechanism (10) and at least one fitting member (20) of the at least one locking connecting device (1) are correspondingly located on a same side of the first container (70) and the second container (80); further optionally,
the combined container further comprises an auxiliary mechanism (50), wherein the auxiliary mechanism (50) is disposed between the first container (70) and the second container (80) to assist the at least one locking connecting device (1) to lockably fix the second container (80) on the first container (70); further optionally,
the auxiliary mechanism (50) comprises a first block (51) disposed on the first container (70) and a second groove disposed on the second container (80), wherein when the second container (80) is stacked on the first container (70), the first block (51) is snapped into the second groove to assist the at least one locking connecting device (1) to fix; further optionally, the auxiliary mechanism (50) and the at least one locking connecting device (1) are located on different sides of the first container (70) and the second container (80), respectively; further optionally,
the at least one locking mechanism (10) of the at least one locking connecting device (1) is disposed on a side or a top of the first container (70); and the fitting member (20) of the at least one of locking connecting device (1) is fixedly disposed on a bottom or a side of the second container (80).

10. The combined container of claim 1, wherein the combined container further comprises a third container (54), and the third container (54) is stacked on and connected to the second container (80); further optionally,
the locking connecting device (1) is disposed between the third container (54) and the second container (80), such that the third container (54) is locked on the second container (80) by the locking connecting device (1).

## Patentansprüche

1. Kombinierter Behälter, umfassend:
einen ersten Behälter (70);
einen zweiten Behälter (80);
eine Verriegelungs-Verbindungsvorrichtung (1), die dazu ausgelegt ist, den ersten Behälter (70) und den zweiten Behälter (80) miteinander zu verbinden, wobei die Verriegelungs-Verbindungsvorrichtung (1) entsprechend zwischen dem ersten Behälter (70) und dem zweiten Behälter (80) angeordnet und so ausgelegt ist, dass der zweite Behälter (80) lösbar am ersten Behälter (70) verriegelt und mit diesem verbunden werden kann;
wobei die Verriegelungsvorrichtung (1) umfasst:
ein am zweiten Behälter (80) angeordnetes Anschlusselement (20); und
einen Verriegelungsmechanismus (10), wobei der Verriegelungsmechanismus (10) funktionsfähig am ersten Behälter (70) anbringbar und so ausgebildet ist, dass er lösbar mit dem Befestigungselement (20) einrastet, wodurch die Verriegelungsvorrichtung (1) zwischen einem verriegelten Zustand und einem entriegelten Zustand umgeschaltet werden kann, wobei, wenn der Verriegelungsmechanismus (10) betätigt wird, um die Verriegelungsvorrichtung (1) in den verriegelten Zustand zu versetzen, der Verriegelungsmechanismus (10) und das Befestigungselement (20) miteinander verrastet sind, um zu verhindern, dass der erste Behälter (70) und der zweite Behälter (80), die miteinander verbunden sind, voneinander getrennt werden; und wenn der Verriegelungsmechanismus (10) betätigt wird, um die Verriegelungsvorrichtung (1) in den entriegelten Zustand zu versetzen, werden der Verriegelungsmechanismus (10) und das Verbindungselement (20) voneinander gelöst, um zu ermöglichen, dass der erste Behälter (70) und der zweite Behälter (80), die miteinander verbunden sind, voneinander getrennt werden können;
**dadurch gekennzeichnet, dass** der Verriegelungsmechanismus (10) ein am ersten Behälter (70) abnehmbar angeordnetes Verriegelungsgehäuse (11) und einen im Verriegelungsgehäuse (11) beweglich angeordneten Schließzylinder (12) umfasst, der Schließzylinder (12) ist so ausgebildet, dass er sich zwischen einer verriegelten Position und einer entriegelten Position bewegen kann, wobei der Schließzylinder (12), wenn er relativ zum Verriegelungsgehäuse (11) in die verriegelte Position bewegt wird, so ausgebildet ist, dass er in das Verbindungselement (20) einrastet; und wenn der Schließzylinder (12) so angesteuert wird, dass er sich relativ zum Verriegelungsgehäuse (11) in die entriegelte Position bewegt, ist der Schließzylinder (12) so ausgelegt, dass er aus dem Befestigungselement (20) gelöst wird;
Der Schließzylinder (12) des Verriegelungsmechanismus (10) ist ein Schiebeverschluss (121), der verschiebbar im Verriegelungsgehäuse (11) angeordnet ist, das Schiebeverschlusselement (121) ist mit einer Verriegelungsöffnung (1211), die so ausgebildet ist, dass sie mit dem Befestigungselement (20) einrastet, und einer Entriegelungsöffnung (1212), die so ausgebildet ist, dass sie vom Befestigungselement (20) gelöst wird, versehen; die Verriegelungsöffnung (1211) steht in er Verbindung mit der Entriegelungsöffnung (1212) entlang einer Gleitrichtung des Schiebeverschlusses (121) in er Verbindung steht, wobei, wenn der Schiebeverschluss (121) zwischen der Verriegelungsposition und der Entriegelungsposition gleitet, das Befestigungselement (20) zwischen der Verriegelungsöffnung (1211) des Schiebeverschlusses (121) und der Entriegelungsöffnung (1212) des Schiebeverschlusses (121) gleiten kann;
die Abmessung eines Kopfabschnitts des Passelements (20) größer ist als die der Verriegelungsöffnung (1211) des Schiebeverschlusses (121) und kleiner als die der Entriegelungsöffnung (1212) des Schiebeverschlusses (121);
das Verriegelungsgehäuse (11) des Verriegelungsmechanismus (10) ist mit einem Einführhohlraum (1101) und einem Gleithohlraum (1102) versehen, die miteinander in Verbindung stehen; die Schiebeverriegelung (121) kann gleitend in den Gleithohlraum (1102) des Verriegelungsgehäuses (11) eingeführt werden; und das Befestigungselement (20) kann in den Einsteckhohlraum (1101) des Verriegelungsgehäuses (11) eingeführt werden, um lösbar mit dem Schiebeverschluss (121) in Rastverbindung gebracht zu werden;
der Verriegelungsmechanismus (10) umfasst ferner einen Schalter (13), und der Schalter (13) ist entsprechend zwischen dem Verriegelungsgehäuse (11) und dem Schiebeverschluss (121) angeordnet und so ausgebildet, dass er es dem Schiebeverschluss (121) ermöglicht, zu gleiten und den Schalter (13) zwischen der verriegelten Position und der entriegelten Position umzuschalten, nachdem der Schiebeverschluss (121) gedrückt wurde; und
Der Schalter (13) umfasst ein Rückstellelement (131) und ein Begrenzungselement (132), wobei das Rückstellelement (131) zwischen dem Verriegelungsgehäuse (11) und der Schiebeverriegelung (121) angeordnet ist und so ausgebildet ist, dass es eine Kraft auf die Schiebeverriegelung (121) ausübt, die der Druckrichtung entgegengesetzt ist; das Begrenzungselement (132) ist zwischen dem Verriegelungsgehäuse (11) und der Schiebeverriegelung (121) angeordnet, wobei das Begrenzungselement (132) so ausgebildet ist, dass es die Schiebeverriegelung (121) lösbar begrenzt; wobei, wenn die Schiebeverriegelung (121) durch das Begrenzungselement (132) begrenzt wird, die Schiebeverriegelung (121) durch das Rückstellelement (131) und das Begrenzungselement (132) in der verriegelten Position gehalten werden kann; und nachdem eine Begrenzung zwischen dem Begrenzungselement (132) und der Schiebeverriegelung (121) aufgehoben ist, die Schiebeverriegelung (121) durch das Rückstellelement (131) automatisch in die verriegelte Position gleiten kann;
wobei ein Begrenzungsblock (1218) an der Schiebeverriegelung (121) angeordnet ist und von dieser vorsteht, das Verriegelungsgehäuse (11) mit einer Begrenzungsnut (1103) versehen ist, die mit dem Begrenzungsblock (1218) zusammenpasst, sich die Begrenzungsnut (1103) des Verriegelungsgehäuses (11) entlang einer Schieberichtung der Schiebeverriegelung (121) erstreckt, und der Begrenzungsblock (1218) der Schiebeverriegelung (121) durch die Begrenzungsnut (1103) des Verriegelungsgehäuses (11) begrenzt werden kann und in diese gleitend eingeführt werden kann;
das Verriegelungsgehäuse (11) ein erstes Gehäuse (111) und ein zweites Gehäuse (112) umfasst, wobei das erste Gehäuse (111) lösbar an dem zweiten Gehäuse (112) angebracht ist, um einen Gleithohlraum (1102) z n (1102) zwischen dem ersten Gehäuse (111) und dem zweiten Gehäuse (112) zu bilden, und der Einführhohlraum (1101) des Verriegelungsgehäuses (111) erstreckt sich durch das erste Gehäuse (111) und das zweite Gehäuse (112); und
Das Verriegelungsgehäuse (11) umfasst ferner eine elastische Druckplatte (113), die am ersten Gehäuse (111) angeordnet ist, wobei sich die elastische Druckplatte (113) in Richtung der Schiebeverriegelung (121) neigt, um auf das Begrenzungselement (132) zu drücken.

2. Kombinierter Behälter nach Anspruch 1, wobei die Schiebeverriegelung (121) ferner mit einer Verriegelungsnut (1213), in die ein Ende des Begrenzungselements (132) eingreift, einer Entriegelungsführungsnut (1214), die mit einem Auszugsende der Verriegelungsnut (1213) in Verbindung steht, einer Verriegelungsführungsnut (1215), die mit einem Einschubende der Verriegelungsnut (1213) in Verbindung steht, sowie einer Entriegelungsnut (1216), die sowohl mit der Entriegelungsführungsnut (1214) als auch mit der Verriegelungsführungsnut (1215) in Verbindung steht, wobei die Entriegelungsführungsnut (1214) so ausgebildet ist, dass sie das Ende des Begrenzungselements (132) so zu führen, dass es von der Verriegelungsnut (1213) in die Entriegelungsnut (1216) gleitet, und die Verriegelungsführungsnut (1215) ist so ausgebildet, dass sie das Ende des Begrenzungselements (132) so führt, dass es von der Entriegelungsnut (1216) in die Verriegelungsnut (1213) gleitet.

3. Kombinierter Behälter nach Anspruch 2, wobei die Verriegelungsnut (1213) V-förmig ist und eine Bodenfläche der Verriegelungsnut (1213), die sich am Auszugsende der Verriegelungsnut (1213) befindet, tiefer liegt als die der Verriegelungsnut (1213), die sich am Einschubende der Verriegelungsnut (1213) befindet.

4. Kombinierter Behälter nach Anspruch 3, wobei eine Bodenfläche der Entriegelungsführungsnut (1214), die an das Ausziehende der Verriegelungsnut (1213) angrenzt, tiefer liegt als die der Verriegelungsnut (1213) am Ausziehende der Verriegelungsnut (1213); oder
eine Bodenfläche der Verriegelungsführungsnut (1215), die an das Einschiebende der Verriegelungsnut (1213) angrenzt, höher ist als die der Verriegelungsnut (1213), die sich am Einschiebende der Verriegelungsnut (1213) befindet; oder
eine Bodenfläche der Entriegelungsführungsnut (1214), die an die Entriegelungsnut (1216) angrenzt, höher ist als die der Entriegelungsnut (1216), und eine Bodenfläche der Verriegelungsführungsnut (1215), die an die Entriegelungsnut (1216) angrenzt, nicht höher ist als die der Entriegelungsnut (1216); oder
die Größe der Entriegelungsführungsnut (1214) nimmt von der Verriegelungsnut (1213) zur en Entriegelungsnut (1216) hin ab, und die Größe der Verriegelungsführungsnut (1215) nimmt von der Entriegelungsnut (1216) zur Verriegelungsnut (1213) hin ab; oder,
die Verriegelungsnut (1213) der Schiebeverriegelung (121), und ein herzförmiger Durchgang wird durch die Entriegelungsführungsnut (1214) der Schiebeverriegelung (121) und die Verriegelungsführungsnut (1215) der Schiebeverriegelung (121) gebildet.

5. Kombinierter Behälter nach Anspruch 2, wobei das Begrenzungselement (132) schwenkbar mit einer Hakenstange (1320) des Verriegelungsgehäuses (11) verbunden ist und das Rückstellelement (131) eine Feder (1310) ist.

6. Kombinierter Behälter nach Anspruch 1, wobei der Verriegelungsmechanismus (10) der Verriegelungsverbindungsvorrichtung (1) am ersten Behälter (70) angeordnet ist, und das Passelement (20) der Verriegelungsverbindungsvorrichtung (1) entsprechend am zweiten Behälter (80) angeordnet ist, so dass, wenn der zweite Behälter (80) auf den ersten Behälter (70) gestapelt wird, der Verriegelungsmechanismus (10) der Verriegelungsverbindungsvorrichtung (1) und das Passelement (20) ineinander einrasten, um einen kombinierten Behälter zu bilden; oder
der erste Behälter (70) einen ersten Behälterkörper (71) und einen ersten Deckelkörper (72) umfasst, der den ersten Behälterkörper (71) abdeckt; der zweite Behälter (80) umfasst einen zweiten Behälterkörper (81) und einen zweiten Deckelkörper (82), der den zweiten Behälterkörper (81) abdeckt; und wobei der Verriegelungsmechanismus (10) der Verriegelungsvorrichtung (1) am ersten Deckelkörper (72) angebracht ist, und das Passstück (20) der Verriegelungsverbindungseinrichtung (1) entsprechend am zweiten Behälterkörper (81) angeordnet ist, so dass der zweite Behälterkörper (81) durch die Verriegelungsverbindungseinrichtung (1) lösbar am ersten Deckelkörper (72) verriegelt ist; oder
der erste Behälter (70) umfasst einen ersten Schrankkörper (73) und eine erste Schublade (74), die verschiebbar in dem ersten Schrankkörper (73) angeordnet ist; der zweite Behälter (80) umfasst einen zweiten Schrankkörper (83) und eine zweite Schublade (84), die verschiebbar in dem zweiten Schrankkörper (83) angeordnet ist; wobei der Verriegelungsmechanismus (10) der Verriegelungsvorrichtung (1) am ersten Schrankkörper (73) angeordnet ist und das Passstück (20) der Verriegelungsvorrichtung (1) am zweiten Schrankkörper (83) angeordnet ist, sodass der erste Schrankkörper (73) durch die Verriegelungsvorrichtung (1) lösbar am zweiten Schrankkörper (83) verriegelt ist; oder
der kombinierte Behälter ferner einen Push-Pull-Mechanismus (60) umfasst, wobei der Push-Pull-Mechanismus (60) eine am ersten Behälter (70) angeordnete Rolle (61) und eine entsprechend am ersten Behälter (70) angeordnete Zugstange (62) umfasst.

7. Kombinierter Behälter nach Anspruch 1, wobei der erste Behälter (70) einen ersten Behälterkörper (71) umfasst, der mit einer ersten Öffnung versehen ist; der zweite Behälter (80) einen zweiten Behälterkörper (81) umfasst, der mit einer zweiten Öffnung versehen ist, wobei der Verriegelungsmechanismus (10) der Verriegelungsvorrichtung (1) am ersten Behälterkörper (71) angeordnet ist, und das Passstück (20) der Verriegelungsverbindungseinrichtung (1) entsprechend am zweiten Behälterkörper (81) angeordnet ist, so dass der zweite Behälterkörper (81) durch die Verriegelungsverbindungseinrichtung (1) lösbar am ersten Behälterkörper (71) verriegelt ist; ferner optional,
wenn der zweite Behälterkörper (81) durch die Verriegelungsvorrichtung (1) am ersten Behälterkörper (71) verriegelt ist, wird die erste Öffnung des ersten Behälterkörpers (71) durch den zweiten Behälterkörper (81) abgedeckt; ferner optional
der erste Behälter (70) ferner einen ersten Deckelkörper (72) umfasst, der die erste Öffnung des ersten Behälterkörpers (71) abdeckt; und der zweite Behälter (80) umfasst ferner einen zweiten Deckelkörper (82), der die zweite Öffnung des zweiten Behälterkörpers (81) abdeckt, so dass der zweite Behälterkörper (81) des zweiten Behälters (80) auf dem ersten Deckelkörper (72) des ersten Behälters (70) gestapelt ist.

8. Kombinierter Behälter nach Anspruch 1, der ferner mindestens ein Paar Verriegelungsverbindungsvorrichtungen (1) umfasst, wobei mindestens zwei Verriegelungsmechanismen (10) des mindestens einen Paares von Verriegelungsverbindungsvorrichtungen (1) entsprechend an zwei Seiten des ersten Behälters (70) angeordnet sind und mindestens zwei Passelemente (20) des mindestens einen Paares von Verriegelungsverbindungsvorrichtungen (1) entsprechend an zwei Seiten des zweiten Behälters (80) angeordnet sind; ferner optional
die mindestens zwei Verriegelungsmechanismen (10) des mindestens einen Paares von Verriegelungsverbindungsvorrichtungen (1) an einer Seite des ersten Behälters (70) angeordnet sind; und die mindestens zwei Passelemente (20) des mindestens einen Paares von Verriegelungsverbindungsvorrichtungen (1) schwenkbar an einer Seite des zweiten Behälters (80) angeordnet sind; oder die mindestens zwei Verriegelungsmechanismen (10) des mindestens einen Paares von Verriegelungsverbindungsvorrichtungen (1) an einer Oberseite des ersten Behälters (70) angeordnet sind; und die mindestens zwei Passelemente (20) des mindestens einen Paares von Verriegelungsverbindungsvorrichtungen (1) fest an einer Unterseite des zweiten Behälters (80) angeordnet sind.

9. Kombinierter Behälter nach Anspruch 1, der ferner mindestens eine Verriegelungsverbindungseinrichtung (1) umfasst, wobei mindestens ein Verriegelungsmechanismus (10) und mindestens ein Passelement (20) us der mindestens einen Verriegelungsverbindungseinrichtung (1) entsprechend auf derselben Seite des ersten Behälters (70) und des zweiten Behälters (80) angeordnet sind; ferner optional
der kombinierte Behälter ferner einen Hilfsmechanismus (50) umfasst, wobei der Hilfsmechanismus (50) zwischen dem ersten Behälter (70) und dem zweiten Behälter (80) angeordnet ist, um die mindestens eine Verriegelungsvorrichtung (1) dabei zu unterstützen, den zweiten Behälter (80) verriegelbar am ersten Behälter (70) zu befestigen; ferner optional,
der Hilfsmechanismus (50) einen ersten Block (51), der am ersten Behälter (70) angeordnet ist, und eine zweite Nut, die am zweiten Behälter (80) angeordnet ist, umfasst, wobei, wenn der zweite Behälter (80) auf den ersten Behälter (70) gestapelt wird, der erste Block (51) in die zweite Nut einrastet, um die mindestens eine Verriegelungsvorrichtung (1) bei der Befestigung zu unterstützen; ferner optional,
befinden sich der Hilfsmechanismus (50) und die mindestens eine Verriegelungsvorrichtung (1) jeweils auf unterschiedlichen Seiten des ersten Behälters (70) und des zweiten Behälters (80);
ferner optional,
der mindestens eine Verriegelungsmechanismus (10) der mindestens einen Verriegelungsverbindungsvorrichtung (1) ist an einer Seite oder einer Oberseite des ersten Behälters (70) angeordnet; und das Befestigungselement (20) der mindestens einen Verriegelungsverbindungsvorrichtung (1) ist fest an einem Boden oder einer Seite des zweiten Behälters (80) angeordnet.

10. Kombinierter Behälter nach Anspruch 1, wobei der kombinierte Behälter ferner einen dritten Behälter (54) umfasst und der dritte Behälter (54) auf den zweiten Behälter (80) gestapelt und mit diesem verbunden ist; ferner optional,
die Verriegelungsvorrichtung (1) zwischen dem dritten Behälter (54) und dem zweiten Behälter (80) angeordnet ist, so dass der dritte Behälter (54) durch die Verriegelungsvorrichtung (1) am zweiten Behälter (80) verriegelt ist.

## Revendications

1. Récipient combiné, comprenant:
un premier conteneur (70);
un deuxième conteneur (80);
un dispositif de raccordement à verrouillage (1) configuré pour assembler le premier conteneur (70) et le deuxième conteneur (80), dans lequel le dispositif de raccordement à verrouillage (1) est disposé de manière correspondante entre le premier conteneur (70) et le deuxième conteneur (80) et configuré de telle sorte que le deuxième conteneur (80) puisse ê tre verrouillé de manière amovible sur le premier conteneur (70) et raccordé à celui-ci de manière amovible;
dans lequel le dispositif de raccordement à verrouillage (1) comprend:
un élément d'emboîtement (20) disposé sur le deuxième récipient (80); et
un mécanisme de verrouillage (10), dans lequel le mécanisme de verrouillage (10) est apte à être disposé de manière fonctionnelle sur le premier récipient (70) et est configuré pour s'encliqueter de manière amovible sur l'élément de raccordement (20), permettant au dispositif de raccordement à verrouillage (1) de basculer entre un état verrouillé et un état déverrouillé, dans lequel, lorsque le mécanisme de verrouillage (10) est actionné pour permettre au dispositif de raccordement à verrouillage (1) d'être dans l'état verrouillé, le mécanisme de verrouillage (10) et l'élément de raccordement (20) s'enclenchent l'un dans l'autre afin d'empêcher le premier récipient (70) et le deuxième récipient (80), une fois assemblés, d'être séparés l'un de l'autre; et lorsque le mécanisme de verrouillage (10) est actionné pour permettre au dispositif de raccordement à verrouillage (1) d'être dans l'état déverrouillé, le mécanisme de verrouillage (10) et l'élément d'emboîtement (20) sont désolidarisés l'un de l' autre pour permettre au premier récipient (70) et au deuxième récipient (80), assemblés l'un à l'autre, d'être séparés l'un de l'autre;
**caractérisé en ce que** le mécanisme de verrouillage (10) comprend un boîtier de verrouillage (11) disposé de manière amovible sur le premier conteneur (70) et un cylindre de verrouillage (12) disposé de manière mobile dans le boîtier de verrouillage (11), le cylindre de verrouillage (12) est configuré pour se déplacer entre une position verrouillée et une position déverrouillée, dans laquelle, lorsque le cylindre de verrouillage (12) est entraîné pour se déplacer vers la position verrouillée par rapport au boîtier de verrouillage (11), le cylindre de verrouillage (12) est configuré pour s'encliqueter sur l'élément d'accouplement (20); et lorsque le cylindre de verrouillage (12) est entraîné pour se déplacer vers la position déverrouillée par rapport au boîtier de verrouillage (11), le cylindre de verrouillage (12) est conçu pour être libéré de l'élément de fixation (20);
le cylindre de serrure (12) du mécanisme de verrouillage (10) est une serrure coulissante (121) disposée de manière coulissante dans le boîtier de verrouillage (11), la serrure coulissante (121) est pourvue d'un orifice de verrouillage (1211) conçu pour s'encliqueter avec l'élément de fixation (20) et d'un orifice de déverrouillage (1212) conçu pour se dégager de l'élément de fixation (20), l'orifice de verrouillage (1211) étant en communication par vo e avec l'orifice de déverrouillage (1212) le long d'une direction de coulissement du verrou coulissant (121), dans lequel, lorsque le verrou coulissant (121) coulisse entre la position verrouillée et la position déverrouillée, l'élément de fixation (20) est capable de coulisser entre le trou de verrouillage (1211) du verrou coulissant (121) et le trou de déverrouillage (1212) du verrou coulissant (121);
la taille de la partie de tête de l'élément d'ajustement (20) est supérieure à celle du trou de verrouillage (1211) du verrou coulissant (121) et inférieure à celle du trou de déverrouillage (1212) du verrou coulissant (121);
le boîtier de verrouillage (11) du mécanisme de verrouillage (10) est muni d'une cavité d'insertion (1101) et d'une cavité coulissante (1102) en communication l'une avec l'autre; le verrou coulissant (121) peut s'insérer de manière coulissante dans la cavité coulissante (1102) du boîtier de verrouillage (11), et l'élément d'emboîtement (20) peut s'insérer dans la cavité d'insertion (1101) du boîtier de verrouillage (11) pour s'emboîter par encliquetage de manière amovible sur le verrou coulissant (121);
le mécanisme de verrouillage (10) comprend en outre un interrupteur (13), et l'interrupteur (13) est disposé de manière correspondante entre le boîtier de verrouillage (11) et le verrou coulissant (121) et est configuré pour permettre au verrou coulissant (121) de coulisser et à l'interrupteur (13) de basculer entre la position verrouillée et la position déverrouillée après que le verrou coulissant (121) a été enfoncé; et
le commutateur (13) comprend un élément de réinitialisation (131) et un élément de limitation (132), l'élément de réinitialisation (131) étant disposé entre le boîtier de verrouillage (11) et le verrou coulissant (121), et l'élément de réinitialisation (131) étant configuré pour exercer une force opposée à la direction de pression sur le verrou coulissant (121); l'élément de limitation (132) est disposé entre le boîtier de verrouillage (11) et le verrou coulissant (121), l'élément de limitation (132) étant agencé pour limiter de manière libérable le verrou coulissant (121); dans lequel, lorsque le verrou coulissant (121) est limité par l'élément de limitation (132), le verrou coulissant (121) peut être maintenu en position verrouillée par l'élément de réinitialisation (131) et l'élément de limitation (132); et une fois que la limitation entre l'élément de limitation (132) et le verrou coulissant (121) est levée, le verrou coulissant (121) peut coulisser automatiquement vers la position verrouillée grâce à l'élément de réinitialisation (131);
dans lequel un bloc de butée (1218) est disposé sur le verrou coulissant (121) et fait saillie à partir de celui-ci, le boîtier de verrouillage (11) est muni d'une rainure de butée (1103) s'adaptant au bloc de butée (1218), la rainure de butée (1103) du boîtier de verrouillage (11) s'étend le long d'une direction de coulissement du verrou coulissant (121), et le bloc de butée (1218) du verrou coulissant (121) peut être retenu par la rainure de butée (1103) du boîtier de verrouillage (11) et s'y insérer de manière coulissante;
le boîtier de verrouillage (11) comprend un premier boîtier (111) et un deuxième boîtier (112), le premier boîtier (111) est monté de manière amovible sur le deuxième boîtier (112) afin de définir une cavité de coulissement (1102) entre le premier boîtier (111) et le deuxième boîtier (112), et la cavité d'insertion (1101) du boîtier de verrouillage (111) s'étend à travers le premier boîtier (111) et le deuxième boîtier (112); et
le boîtier de verrouillage (11) comprend en outre une plaque de pression élastique (113) disposée sur le premier boîtier (111), et la plaque de pression élastique (113) bascule vers le verrou coulissant (121) afin d'exercer une pression sur l'élément de butée (132).

2. Le récipient combiné selon la revendication 1, dans lequel le verrou coulissant (121) est en outre muni d'une rainure de verrouillage (1213) dans laquelle s'accroche une extrémité de l'élément de butée (132), d'une rainure de guidage de déverrouillage (1214) en communication avec une extrémité de sortie de la rainure de verrouillage (1213), une rainure de guidage de verrouillage (1215) en communication avec une extrémité d'entrée de la rainure de verrouillage (1213), et une rainure de déverrouillage (1216) en communication à la fois avec la rainure de guidage de déverrouillage (1214) et la rainure de guidage de verrouillage (1215), la rainure de guidage de déverrouillage (1214) étant configurée pour guider l'extrémité de l'élément de limitation (132) à coulisser de la rainure de verrouillage (1213) vers la rainure de déverrouillage (1216), et la rainure de guidage de verrouillage (1215) est configurée pour guider l'extrémité de l'élément de limitation (132) afin qu'elle coulisse de la rainure de déverrouillage (1216) vers la rainure de verrouillage (1213).

3. Le récipient combiné selon la revendication 2, dans lequel la rainure de verrouillage (1213) présente une forme en V, et une surface inférieure de la rainure de verrouillage (1213) située à l'extrémité de sortie de la rainure de verrouillage (1213) est plus basse que celle de la rainure de verrouillage (1213) située à l'extrémité d'entrée de la rainure de verrouillage (1213).

4. Le conteneur combiné selon la revendication 3, dans lequel une surface inférieure de la rainure de guidage de déverrouillage (1214) adjacente à l'extrémité de sortie de la rainure de verrouillage (1213) est plus basse que celle de la rainure de verrouillage (1213) située à l'extrémité de sortie de la rainure de verrouillage (1213); ou
la surface inférieure de la rainure de guidage de verrouillage (1215), adjacente à l'extrémité d'insertion de la rainure de verrouillage (1213), est plus haute que celle de la rainure de verrouillage (1213) située à l'extrémité d'insertion de la rainure de verrouillage (1213); ou
la surface inférieure de la rainure de guidage de déverrouillage (1214) adjacente à la rainure de déverrouillage (1216) est plus haute que celle de la rainure de déverrouillage (1216), et la surface inférieure de la rainure de guidage de verrouillage (1215) adjacente à la rainure de déverrouillage (1216) n'est pas plus haute que celle de la rainure de déverrouillage (1216); ou, la dimension de la rainure de guidage de déverrouillage (1214) diminue de la rainure de verrouillage (1213) vers la rainure de déverrouillage d' s (1216), et la dimension de la rainure de guidage de verrouillage (1215) diminue de la rainure de déverrouillage (1216) vers la rainure de verrouillage (1213); ou,
la rainure de verrouillage (1213) du verrou coulissant (121), et un passage en forme de cœur est délimité par la rainure de guidage de déverrouillage (1214) du verrou coulissant (121) et la rainure de guidage de verrouillage (1215) du verrou coulissant (121).

5. Conteneur combiné selon la revendication 2, dans lequel l'élément de limitation (132) est relié de manière pivotante à une tige à crochet (1320) du boîtier de verrouillage (11) et l'élément de réinitialisation (131) est un ressort (1310).

6. Conteneur combiné selon la revendication 1, dans lequel le mécanisme de verrouillage (10) du dispositif de raccordement à verrouillage (1) est disposé sur le premier conteneur (70), et l'élément d'emboîtement (20) du dispositif de raccordement à verrouillage (1) est disposé de manière correspondante sur le deuxième conteneur (80), de telle sorte que, lorsque le deuxième conteneur (80) est empilé sur le premier conteneur (70), le mécanisme de verrouillage (10) du dispositif de raccordement à verrouillage (1) et l'élément d'emboîtement (20) s'emboîtent par encliquetage l'un dans l'autre pour former un conteneur combiné; ou le premier récipient (70) comprend un premier corps de récipient (71) et un premier corps de couvercle (72) recouvrant le premier corps de récipient (71); le deuxième récipient (80) comprend un deuxième corps de récipient (81) et un deuxième corps de couvercle (82) recouvrant le deuxième corps de récipient (81); et dans lequel le mécanisme de verrouillage (10) du dispositif de raccordement à verrouillage (1) est monté sur le premier corps de couvercle (72), et l'élément d'emboîtement (20) du dispositif de raccordement à verrouillage (1) est disposé de manière correspondante sur le deuxième corps de récipient (81), de telle sorte que le deuxième corps de récipient (81) soit verrouillé de manière amovible sur le premier corps de couvercle (72) par le dispositif de raccordement à verrouillage (1); ou,
le premier conteneur (70) comprend un premier corps d'armoire (73) et un premier tiroir (74) monté de manière coulissante dans le premier corps d'armoire (73); le deuxième conteneur (80) comprend un deuxième corps d'armoire (83) et un deuxième tiroir (84) monté de manière coulissante dans le deuxième corps d'armoire (83); et dans lequel le mécanisme de verrouillage (10) du dispositif de raccordement à verrouillage (1) est disposé sur le premier corps d'armoire (73), et l'élément d'accouplement (20) du dispositif de raccordement à verrouillage (1) est disposé sur le deuxième corps d'armoire (83), de telle sorte que le premier corps d'armoire (73) soit verrouillé de manière amovible sur le deuxième corps d'armoire (83) par le dispositif de raccordement à verrouillage (1); ou bien,
le conteneur combiné comprend en outre un mécanisme de poussée-traction (60), le mécanisme de poussée-traction (60) comprenant un rouleau (61) disposé sur le premier conteneur (70) et une tige de traction (62) disposée de manière correspondante sur le premier conteneur (70).

7. Conteneur combiné selon la revendication 1, dans lequel le premier conteneur (70) comprend un premier corps de conteneur (71) muni d'une première ouverture; le deuxième conteneur (80) comprend un deuxième corps de conteneur (81) muni d'une deuxième ouverture, dans lequel le mécanisme de verrouillage (10) du dispositif de raccordement à verrouillage (1) est disposé sur le premier corps de conteneur (71), et l'élément d'emboîtement (20) du dispositif de raccordement à verrouillage (1) est disposé de manière correspondante sur le deuxième corps de récipient (81), de telle sorte que le deuxième corps de récipient (81) soit verrouillé de manière amovible sur le premier corps de récipient (71) par le dispositif de raccordement à verrouillage (1); en outre, de manière facultative,
lorsque le deuxième corps de récipient (81) est verrouillé sur le premier corps de récipient (71) par le dispositif de raccordement à verrouillage (1), la première ouverture du premier corps de récipient (71) est recouverte par le deuxième corps de récipient (81); en outre, de manière facultative,
le premier récipient (70) comprend en outre un premier corps de couvercle (72) recouvrant la première ouverture du premier corps de récipient (71); et le deuxième récipient (80) comprend en outre un deuxième corps de couvercle (82) recouvrant la deuxième ouverture du deuxième corps de récipient (81), de telle sorte que le deuxième corps de récipient (81) du deuxième récipient (80) soit empilé sur le premier corps de couvercle (72) du premier récipient (70).

8. Conteneur combiné selon la revendication 1, comprenant en outre au moins une paire de dispositifs de raccordement à verrouillage (1), dans lequel au moins deux mécanismes de verrouillage (10) de ladite au moins une paire de dispositifs de raccordement à verrouillage (1) sont disposés de manière correspondante sur les deux côtés du premier conteneur (70), respectivement, et au moins deux éléments d'emboîtement (20) de ladite au moins une paire de dispositifs de raccordement à verrouillage (1) sont disposés de manière correspondante sur deux côtés du deuxième conteneur (80), respectivement; en outre, de manière facultative,
les au moins deux mécanismes de verrouillage (10) de ladite au moins une paire de dispositifs de raccordement à verrouillage (1) sont disposés sur un côté du premier conteneur (70); et les au moins deux éléments d'emboîtement (20) de la au moins une paire de dispositifs de raccordement à verrouillage (1) sont disposés de manière pivotante sur un côté du deuxième récipient (80); ou bien, les au moins deux mécanismes de verrouillage (10) de la au moins une paire de dispositifs de raccordement à verrouillage (1) sont disposés sur le dessus du premier récipient (70); et les au moins deux éléments d'emboîtement (20) de la au moins une paire de dispositifs de raccordement à verrouillage (1) sont disposés de manière fixe sur le fond du deuxième récipient (80).

9. Conteneur combiné selon la revendication 1, comprenant en outre au moins un dispositif de raccordement à verrouillage (1), dans lequel au moins un mécanisme de verrouillage (10) et au moins un élément d'emboîtement (20) , de l'au moins un dispositif de raccordement à verrouillage (1) sont situés de manière correspondante sur un même côté du premier conteneur (70) et du deuxième conteneur (80); en outre, de manière facultative,
le conteneur combiné comprend en outre un mécanisme auxiliaire (50), dans lequel le mécanisme auxiliaire (50) est disposé entre le premier conteneur (70) et le deuxième conteneur (80) pour aider le au moins un dispositif de raccordement à verrouillage (1) à fixer de manière verrouillable le deuxième conteneur (80) sur le premier conteneur (70); en outre, de manière facultative,
le mécanisme auxiliaire (50) comprend un premier bloc (51) disposé sur le premier conteneur (70) et une deuxième rainure disposée sur le deuxième conteneur (80), dans lequel, lorsque le deuxième conteneur (80) est empilé sur le premier conteneur (70), le premier bloc (51) s'enclenche dans la deuxième rainure pour aider le au moins un dispositif de connexion à verrouillage (1) à se fixer; en outre, de manière facultative,
le mécanisme auxiliaire (50) et le au moins un dispositif de connexion à verrouillage (1) sont situés respectivement sur des côtés différents du premier conteneur (70) et du deuxième conteneur (80); en outre, de manière facultative,
le au moins un mécanisme de verrouillage (10) du au moins un dispositif de raccordement à verrouillage (1) est disposé sur un côté ou sur le dessus du premier récipient (70); et l'élément d'emboîtement (20) du au moins un dispositif de raccordement à verrouillage (1) est disposé de manière fixe sur le fond ou sur un côté du deuxième récipient (80).

10. Récipient combiné selon la revendication 1, dans lequel le récipient combiné comprend en outre un troisième récipient (54), et le troisième récipient (54) est empilé sur le deuxième récipient (80) et relié à celui-ci; en outre, de manière facultative,
le dispositif de raccordement à verrouillage (1) est disposé entre le troisième conteneur (54) et le deuxième conteneur (80), de telle sorte que le troisième conteneur (54) soit verrouillé sur le deuxième conteneur (80) par le dispositif de raccordement à verrouillage (1).
